# EUROPEAN PATENT SPECIFICATION

(11) **EP 4 304 824 B1**
(45) Date of publication and mention of the grant of the patent: **25.06.2025**
(21) Application number: 22706053.0
(22) Date of filing: 17.02.2022
(51) Int. Cl.: B29B 9/08, B29B 9/12, C08J 3/22, C08K 5/01, C08K 5/134, C08K 5/526

(54) **PELLETIZATION OF A POLYMER STABILIZER MIXTURE**
PELLETISIERUNG EINES POLYMERSTABILISATORGEMISCHS
PELLETISATION D'UN MÉLANGE DE STABILISATEURS DE POLYMÈRE

(30) Priority: 09.03.2021 EP 21161643
(43) Date of publication of application: 17.01.2024
(73) Proprietor: BASF SE, 67056 Ludwigshafen am Rhein (DE)
(72) Inventor: GFROERER, Thomas Georg, 5082 Kaisten (CH)
(74) Representative: BASF IP Association
(86) International application number: PCT/EP2022/053891
(87) International publication number: WO 2022/189112

(56) References cited:
- US-A- 5 846 656
- US-B2- 8 613 800

## Description

The current invention relates to a method for manufacturing a pellet, which method comprises the steps of pressing a mixture for compaction, which comprises a polymer stabilizer mixture, which contains tris(2,4-ditert-butylphenyl) phosphite and tetrakis-[3-(3,5-ditert-butyl-4-hydroxyphenyl)-propionyloxymethyl]methane in a weight ratio of around 2 to 1, and a processing aid, through a nozzle of a pellet mill to obtain a strand, and of comminuting the strands to obtain the pellet. A further embodiment is a pellet, which comprises the polymer stabilizer mixture and the processing aid. A further embodiment is a use of the pellet for a dust-free handling of its components at a manufacturing of a stabilized polymer. A further embodiment is a method for manufacturing of a stabilized polymer, which comprises the step of incorporating the pellet into a polymer, which is a polyolefin, a polystyrene or a mixture thereof, to obtain the stabilized polymer. A further embodiment is the mixture for compaction in the physical form of a powder.

An organic polymer, which is used as a constructive material to build or to be part of an article, is susceptible to degradation by oxidation, heat or light. There is a short-term degradation, which occurs at processing of the polymer, for example when the polymer obtained from the polymer synthesis is mechanically transformed into a desired final article or into an intermediate article. The intermediate article is often the product of a process, which serves to incorporate specifically desired additives into the polymer obtained from the polymer synthesis. The short-time degradation is often characterized by a relatively short exposure to a relatively high process temperature, for example above 80°C to 330°C, which occurs in many instances in combination with mechanical stress. In contrast to the short-term degradation, the long-term degradation of a polymer, typically in the form of the desired final article, occurs during a foreseen use. The foreseen use of the desired final article might lead to a long-term expose of the polymer towards light, oxygen, increased temperatures, e.g. above room temperature but below 80°C, water or aggressive chemicals. Often, a mixture of polymer stabilizers is employed and sometimes, the mixture of polymer stabilizers provides synergistic effects in comparison to the single polymer stabilizers.

It is long known to incorporate a polymer stabilizer into an organic polymer for stabilization against degradation by oxidation, heat or light. The incorporation of the polymer stabilizer is typically done for a thermoplastic polymer during processing of the polymer, where the heated polymer possesses a reduced viscosity or is close to a liquid state and thus a homogenous distribution of the polymer stabilizer in the polymer is supported. A polymer stabilizer is very often solid at room temperature and obtained from its synthesis after work-up in the form of a powder. Practical problems arise at the actual incorporation of a polymer stabilizer in powder form.

Handling of a powder is prone to an easy generation of dust. Dust is critical from an occupational health perspective for workers at a manufacturing plant, from a plant safety perspective, e.g. a dust explosion, and from a plant cleanness perspective, e.g. a dust soiling of the plant equipment. Furthermore, the incorporation of the powder into a polymer is typically not conducted in a batch-wise manner. Instead, a continuous dosing of a powder to a polymer, which is processed in a continuous way for example in an extruder, in an amount which is typically below 0.5% by weight of the polymer is prone to fluctuations of the really incorporated amount in a specific moment of time. Hence, a large overall amount of polymer contains afterwards statistically the same amount of polymer stabilizer, but this not necessarily true for single units out of the overall amount of polymer. If a mixture of polymer stabilizers is incorporated into a polymer, the aforementioned dosing topics can get more problematic, if an additional demixing of the mixture of polymer stabilizers occurs. For example, even if the really incorporated amount in a specific moment of time is kept the same, a relative ratio of the individual polymer stabilizer to each other might fluctuate.

Several approaches are known for providing a suitable dust-free dosage form of a polymer stabilizer. One direction is to provide a suitable dust-free dosage form without adding a further ingredient, i.e. an ingredient is not needed as polymer stabilizer. For example, the polymer stabilizer in powder form is press-agglomerated via a roll compaction to obtain flakes. Another approach is the formation of pastilles from the polymer stabilizer in powder form by melting the mentioned one and let single drops of the melt solidify on a cooled surface. Another approach is the formation of pellets from the polymer stabilizer in powder form by heating and kneading the mentioned one in an extruder at a temperature above the softening point of the polymer stabilizer, extruding the heated mass through a die to form a warm strand and cutting the warm strand into pellets. Another direction is to provide a suitable dust-free dosage form by adding a further ingredient, i.e. an ingredient which is not needed as polymer stabilizer. The further ingredient, sometimes called compaction aid, binder or processing aid, in case of a polymeric further ingredient also masterbatch polymer or carrier polymer, acts typically as a type of hot-melt glue for the polymer stabilizer powder respectively its particles. Whether the polymer stabilizer itself melts to at least a major part depends on the applied temperature and the chemical nature of the further ingredient in relation to the polymer stabilizer, particularly whether a type of mutual solubility exists. An addition of a further ingredient in the dosage form of the polymer stabilizer has advantages. Particularly, a dosage form of a polymer stabilizer might be obtained initially dust-free simply by sieving respectively screening dust at the end of its manufacturing. However, attrition resistance of an initially dust-free dosage form is a property, which gets relevant in view of transport of the dosage form and associated formation of dust.

WO 94/07946 A1 relates to recycled plastics, predominantly thermoplastics, from domestic, commercial and industrial waste, which can be stabilized against thermooxidative degradation by adding a combination of a sterically hindered phenol with an organic phosphite or phosphonite and a metal salt of a fatty acid. At many of its inventive examples, a stabilizer mixture of tris(2,4-ditert-butylphenyl) phosphite, tetrakis-[3-(3,5-ditert-butyl-4-hydroxy-phenyl)-propionyloxymethyl]methane and calcium stearate in a weight ratio of 2:1:2 is shown at stabilization of high density polyethylene and/or polypropylene. In its description, the addition of the stabilizer mixture is proposed to occur in compact, extruded form, on a support material or directly as a mixture or in the form of powders.

JP H06-254845 relates to a granulated stabilizer with stated excellent anti-powdering properties and dispersibility by a method wherein after a powder of a heat stabilizer and a powder of an organic compounding agent with a lower melting point or softening point than that of the heat stabilizer are mixed at a specified ratio, the mixture is fed into a ring grating plate and is extruded into a granular shape from the grating plate by means of a rotating roller. 100 pts wt. powder of a heat stabilizer such as a lead salt, zeolite and a metal soap and 2-60 pts. wt powder of an organic compounding agent such as wax and a higher fatty acid are tea unto a mixer 1 and they are tightly mixed at a temperature being at most melting point or softening point of the organic compounding agent. This mixture is transferred into a container 10 and is heated at a temperature being at least melting point or softening point of the organic compounding agent. Stirring by means of a stirring blade 11 is made in such a way that shearing force to the mixture does not act substantially on the mixture. After the mixture is uniformly heated, it is transferred to a molding apparatus 14. A grating plate 16 with a lot of perforated holes 20 is provided in a ring-like shape in the molding apparatus 14 and a roller is rotated on its own axis and revolved on the grating plate 16. The heated mixture is pushed into the perforated holes 20 and is extruded into a granulated article 21.

WO 95/25767 A1 relates to high-density polyethylene (HDPE) which experiences a reduction in molecular weight during processing and is obtainable by means of catalysts of the Ziegler-Natta type. The HDPE can be stabilized against thermo-oxidative degradation by addition of a combination of a sterically hindered phenol and an organic phosphite or phosphonite and calcium oxide. In its comparative example C, a stabilization of HDPE with tris(2,4-ditert-butylphenyl) phosphite, tetrakis-[3-(3,5-ditert-butyl-4-hydroxy-phenyl)-propionyloxymethyl]methane and calcium stearate in a weight ratio of 2:1:2 is shown. In its inventive example 1, a stabilization of HDPE with tris(2,4-ditert-butylphenyl) phosphite, tetrakis-[3-(3,5-ditert-butyl-4-hydroxy-phenyl)-propionyloxymethyl]methane and calcium oxide in a weight ratio of 2:1:2 is shown. In its description, an incorporation of the stabilizer mixture to the polymer is proposed as in powder form, granular form or compacted form. Alternatively, a preparation of a masterbatch with LDPE as inert support is proposed.

US 5846656 relates to a stabilizing system for stabilizing polymeric materials against ultraviolet light and thermooxidative deterioration, in which the stabilizing system is in pellet form. The pellet is formed from a substantially dry homogeneous mixture of at least one stabilizer and an agent which will prevent melting of the stabilizer. The stabilizer compound makes up about 50% to about 98% by weight of the mixture. The stabilizers are antioxidants such as phosphites and hindered phenols or hindered amine UV light stabilizers, or combinations thereof. The melt preventing agent may be a compound derived from a fatty acid or a fatty alcohol, or a fatty acid or a fatty alcohol, or a combination of fatty acids or fatty alcohols which makes up about 3% to 10% of the homogeneous mixture. The fatty acids, fatty alcohols, and the compounds derived therefrom preferably have a low melting point in the range of 50 to 100 °C and preferably between 50 to about 80 °C. The melt preventing agent may alternatively be a lubricating agent having a small particle size, which makes up about 2 to 50% by weight of the homogeneous mixture. In its example 5, a mixture of tris(2,4-ditert-butylphenyl) phosphite and tetrakis-[3-(3,5-ditert-butyl-4-hydroxy-phenyl)-propionyloxymethyl]methane in a weight ratio of 2 to 1 fails to result in pellets in a laboratory pellet mill model CL-3 of California Pellet Mill Company. In its examples 11 and 14, mixtures of tris(2,4-ditert-butylphenyl) phosphite, tetrakis-[3-(3,5-ditert-butyl-4-hydroxy-phenyl)-propionyloxymethyl]methane and a low density polyethylene in a weight ratio of 65 : 32 : 3 and a weight ratio of 65 : 33 : 2 result in pellets. In its example 17, a mixture of tris(2,4-ditert-butylphenyl) phosphite, tetrakis-[3-(3,5-ditert-butyl-4-hydroxy-phenyl)-propionyloxymethyl]methane and glyceryl monostearate in a weight ratio of 65 : 32 : 3 results in pellets.

US 2008/0119606 relates to compositions of additives for plastics comprising A) from 1 % to 25% (percent by weight) of a polyolefin matrix comprising one or more polyolefins having a melting point of 160° C. or less, said melting point being determined by differential scanning calorimetry (DSC), according to ISO 11357 and B) from 75% to 99% (percent by weight) of one or more solid additives for polymers.

US 6033600 relates to a stabilizer blend composition and a method for providing compacted particles. The compacted particles exhibit reduced levels of dust and are durable during handling. The composition contains a pentaerythritol phosphite, a hindered phenolic isocyanurate, a metal salt of a fatty acid and hydrotalcite. The method involves blending the above ingredients and compacting them under pressure to form compacted particles, such as pellets. The compacted particles are useful as additives to polymeric compositions for stabilization thereof.

US 2001/0044518 A1 relates to low-dust granules of plastic additives, comprising a) a phenolic antioxidant, an organic phosphite or phosphonite, a phosphonate, a sterically hindered amine or a UV absorber, individually, or a mixture of these compounds, and b) at least one epoxy compound which is solid at room temperature. The granules are particularly suitable for stabilizing polymers, especially polyolefins such as polypropylene or polyethylene. At its inventive example A12, a composition of bisphenol A diglycidyl ether Araldit GT 7072, tris(2,4-ditert-butylphenyl) phosphite, tetrakis-[3-(3,5-ditert-butyl-4-hydroxy-phenyl)-propionyloxymethyl]methane, calcium stearate and calcium oxide in a weight ratio of around 47:5:5:2:8 is compacted into a granule by extrusion in a co-kneader. At its inventive example B12, a composition of bisphenol A diglycidyl ether Araldit GT 7072, tris(2,4-ditert-butylphenyl) phosphite, tetrakis-[3-(3,5-ditert-butyl-4-hydroxy-phenyl)-propionyloxymethyl]methane, calcium stearate, calcium oxide and a polyethylene wax PE 520 in a weight ratio of around 47:5:5:2:8:7 is compacted into a granule by extrusion in a co-kneader. At its inventive example B13, a composition of bisphenol A diglycidyl ether Araldit GT 7072, tris(2,4-ditert-butylphenyl) phosphite, octadecyl 3-(3,5-di-tert-butyl-4-hydroxyphenyl)propionate and calcium stearate in a weight ratio of around 12:2:1:2 is compacted into a granule by extrusion in a co-kneader. At its comparative example 2, a compacted stabilizer mixture of tris(2,4-ditert-butylphenyl) phosphite, tetrakis-[3-(3,5-ditert-butyl-4-hydroxy-phenyl)-propionyloxymethyl]methane, calcium stearate and calcium oxide in a weight ratio of 5:5:2:8 is employed together with bisphenol A diglycidyl ether Araldit GT 7072 (with a relative weight of 47) for stabilization of a PP/EPDM polymer. At its comparative examples C1 and C2, stabilizer granules comprising bisphenol A diglycidyl ether Araldit GT 7072, tris(2,4-ditert-butylphenyl) phosphite, tetrakis-[3-(3,5-ditert-butyl-4-hydroxy-phenyl)-propionyloxymethyl]methane, calcium stearate and calcium oxide in a weight ratio of around 47:5:5:2:8 are employed for stabilization of a PP/EPDM polymer. It its description, it is proposed that the granules may also include additional substances, such as thermoplastic polymers (for example, polyolefins or polyolefin waxes).

US 6596198 relates to a pelleted stabilizer additive system and a method of making same with a good pellet yield, preferably at least about 90 wt.%. The stabilizer additive system comprises at least a stabilizer and a processing aid, preferably a mold release agent. The processing aid has a lower melting temperature than the stabilizer. The stabilizer comprises less than 50 wt. % the combined total weight of the stabilizer and the mold release agent.

WO 2008-033410 relates to high concentration pelletized additive concentration or polymer stabilization agent or blends and their preparations, which can be used in various polymerization processes to enhance stability. The pelletized additive concentrates comprise at least 10 wt.% of a carrier polymer and are obtained in the examples by heating the additive mixtures together with the carrier polymer in an extruder above the melting temperature of the carrier polymer but lower than the melting temperature of the main additive, which is followed by cutting the warm strands into pellets. Example 4 results in pellets with a content of 48 wt.% tris(2,4-ditert-butylphenyl) phosphite and 10 wt.% tetrakis-[3-(3,5-ditert-butyl-4-hydroxy-phenyl)-propionyloxymethyl]methane at a pellet with an overall polymer stabilizer content of 70 wt.% and a content of polyethylene as a carrier polymer of 30 wt.%.

International PCT application WO 2021/048061 relates to a method for manufacturing a pellet in a pellet mill, which method comprises the steps of
(A) pressing a mixture for compaction by a roller through a nozzle to obtain a strand, and
(B) comminuting the strand to obtain the pellet,
wherein the mixture for compaction comprises
(i) 87 to 97 wt.% of a polymer stabilizer, which is tris(2,4-ditert-butylphenyl) phosphite (CAS-No. 31570-04-4), and
(ii) 3 to 13 wt.% of a processing aid, which is a propylene-ethylene copolymer and which possesses a melting enthalpy below 100 J / g at 101.32 kPa.

The pellet is useful for a dust-free handling of its polymer stabilizer at a manufacturing of the stabilized polymer. Furthermore, a method for stabilizing a polymer, which is a polyolefin, a polystyrene or a mixture thereof, is disclosed, which comprises the dosing of the pellet to the polymer.

US5846656A discloses pellets obtainable with a pellet mill comprising a stabilizer mixture and a melt preventing compound.

There is still a need for further solid dosage forms of a polymer stabilizer mixtures, which are originally in the form of powders as starting material. In a first aspect, the manufacturing of a dosage form respectively of the dosage form units should ideally occur without warming of the polymer stabilizers or at least minimize it. First, this saves process energy, which would be necessary for warming of the polymer stabilizer mixture either by direct heating or by indirect heating, i.e. mechanical stress is transformed into thermal energy, which results in a clear increase of the temperature of the processed polymer stabilizer mixture. Secondly, this also avoids an unnecessary exposure of the polymer stabilizer mixture to an increased temperature. While an unnecessary exposure is in general to be avoided, an individual polymer stabilizer might also undergo a phase change, e.g. an originally crystalline material is transferred into a viscous state. Furthermore, the manufacturing of a dosage form should occur without generation of deficient product, i.e. the employed starting material of the polymer stabilizer mixture should be processed in a high percentage into the dosage form in one run. In other words, an amount of generated rejects should be low, even if the rejects are in a form that they can be re-employed directly as a starting material again. An example for removing rejects is a sieving of the desired dosage form to obtain an initially dust-free dosage form. In a second aspect, a dosage form of a polymer stabilizer mixture should after its manufacturing stay stable during storage and transport. Particularly, an initially dust-free dosage form might again generate dust respectively fines by attrition of the dosage form units versus each other at exposure to vibrations, for example during filling into a bag, at a transportation of the filled bag or at feeding operations of the dosage form units for incorporation into a polymer to be stabilized. Accordingly, a certain level of attrition resistance of the dosage form is desirable. In a third aspect, the units of a dosage form should ideally not be too diverse in its shape and weight, since this allows a more accurate feeding of the dosage form units at the incorporation into a polymer to be stabilized. A consequence of a more accurate feeding is especially at a continuous dosage into a polymer to be stabilized that the concentrations of the polymer stabilizer mixture and its individual polymer stabilizers are less fluctuating in the stabilized polymer. In other words, the local concentration of a polymer stabilizer at a certain part of the stabilized polymer shows less deviation from an average concentration of the polymer stabilizer in the whole stabilized polymer. If the feeding of the dosage form units occurs at the incorporation into the polymer to be stabilized at a stage, where the polymer is itself still present as solid units, e.g. pellets, then it is advantageous that the dosage form units are relatively similar in shape and weight to the solid units of the polymer. This disfavors that a mixture of the dosage form units and the solid units of the polymer to be stabilized segregate while being transported as a mixture. An example for such a transport is a pneumatic transport of a mixture of a polymer to be stabilized and the polymer stabilizer mixture from a storage facility to the equipment for the incorporation into the polymer, e.g. an extruder. In a fourth aspect, the dosage form of the polymer stabilizer mixture should contain a low content of an auxiliary ingredient. The auxiliary ingredient might be present only during a manufacturing of the dosage form, e.g. addition of a solvent, which is afterwards removed. The auxiliary ingredient might be present permanently, i.e. the composition of the dosage form contains an auxiliary ingredient, which will be incorporated into the polymer to be stabilized. In a fifth aspect, a stabilization of a polymer is supported by an ideally homogenous distribution of individual polymer stabilizer molecules throughout the polymer to be stabilized. Or in case that a polymer stabilizer is not soluble as an individual molecule in the polymer to be stabilized, aggregates of individual molecules of the insoluble polymer stabilizer or even larger particles out of aggregates of individual polymer stabilizer molecules are distributed homogenously in the polymer to be stabilized. The potential influence of a dosage form for a distribution of a polymer stabilizer is obvious by considering that at the beginning, all polymer stabilizer molecules are concentrated in the dosage form, whereas afterwards all polymer stabilizer molecules are ideally homogenously distributed in the polymer to be stabilized. An inhomogeneous distribution of a polymer stabilizer in the polymer to be stabilized might also get noticed differently to a decreased stability against degradation of the stabilized polymer in comparison to a polymer stabilized by a more perfect initial distribution like in case of mixing powders of polymer and polymer stabilizers. For example, an unevenly distributed polymer stabilizer in the stabilized polymer might disturb surface properties in case a thin polymer film manufacturing from the stabilized polymer or might lead to clogging of filters or nozzles in case a spin-extrusion of the stabilized polymer. The nature of the polymer to be stabilized interacts with a suitable polymer stabilizer. For example, a polyamide turns on its way to a molten state into a type of solvent comparable to dimethylsulfoxide, whereas a polyolefin typically turns on its way to a molten state only into a type of solvent like n-hexane or decaline. Hence, there is less potential for correction of the distribution of the polymer stabilizers in a polyolefin during its processing at a high temperature than in polyamide.

It has now been found a method for manufacturing a pellet in a pellet mill, which comprises a roller and a die with a nozzle, which method comprises the steps of
(A) pressing a mixture for compaction by the roller through the nozzle to obtain a strand, and
(B) comminuting the strand to obtain the pellet,

wherein the mixture for compaction comprises
   (i) 87 to 97 wt.% of a polymer stabilizer mixture, which comprises the polymer stabilizers
      (i-1) 62 to 72 wt.% of tris(2,4-ditert-butylphenyl) phosphite (CAS-No. 31570-04-4),
      (i-2) 28 to 38 wt.% of tetrakis-[3-(3,5-ditert-butyl-4-hydroxy-phenyl)-propionyloxymethyl]methane (CAS-No. 6683-19-8), and
      wt.% of the polymer stabilizers (i-1) and (i-2) are based on the weight of the polymer stabilizer mixture, and
   (ii) 3 to 13 wt.% of a processing aid, which is a polyethylene and which possesses a weight average molecular weight above 2500 Da and below 16000 Da,
and wt.% is based on the weight of the mixture for compaction.

The weight percentages of the components (i) and (ii) of the mixture for compaction are based on the weight of the mixture for compaction. Accordingly, the weight percentages of all components contained in the mixture for compaction, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.

The weight percentages of the polymer stabilizers (i-1) and (i-2) of the polymer stabilizer mixture are based on the weight of the polymer stabilizer mixture. Accordingly, the weight percentages of all components contained in the polymer stabilizer mixture, which includes the polymer stabilizers (i-1) and (i-2) summarizes to overall 100 wt.%. In other words, the sum of all components is 100 wt.%. The sum of polymer stabilizers (i-1) and (i-2) is below or equal to 100 wt.%. The overall amount of the polymer stabilizers (i-1) and (i-2) is in the range of 90 to 100 wt.%, preferably in the range of 92 to 100 wt.%, more preferably in the range of 94 to 100 wt.%, very preferably in the range of 95 to 100 wt.%, particularly in the range of 96 to 100 wt.%, more particularly in the range of 97 to 100 wt.%, very particularly in the range of 98 to 100 wt.%, especially in the range of 99 to 100 wt.% and more especially, the polymer stabilizer mixture consists out of the polymer stabilizers (i-1) and (i-2).

Preferred is a method, wherein the overall amount of the polymer stabilizers (i-1) and (i-2) in the polymer stabilizer mixture is in the range of 92 wt.% to 100 wt.%.

Preferred is a method, wherein the overall amount of the polymer stabilizers (i-1) and (i-2) in the polymer stabilizer mixture is in the range of 95 wt.% to 100 wt.%.

A polymer stabilizer serves to stabilize a polymer susceptible to oxidative, thermal or light-induced degradation against degradation by oxidation, heat or light.

Tris(2,4-ditert-butylphenyl) phosphite (CAS-No. 31570-04-4) is depicted below 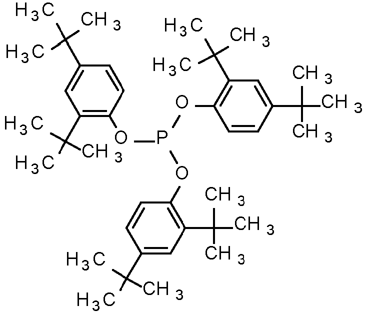 and contained for example in the commercial polymer stabilizer Irgafos 168 (TM BASF). It functions mainly as a short-term processing polymer stabilizer in a polymer. A short-term processing polymer stabilizer is employed against a short-time degradation, which is often characterized by a relatively short exposure of a polymer to a relatively high process temperature, for example above 80°C to 330°C, which occurs in many instances in combination with mechanical stress.

Tetrakis-[3-(3,5-ditert-butyl-4-hydroxy-phenyl)-propionyloxymethyl]methane (CAS-No. 6683-19-8), which is sometimes also called pentaerythritol tetrakis-[3-(3,5-di-tert-butyl-4-hydroxyphenyl)-propionate] (CAS-No. 6683-19-8), is depicted below 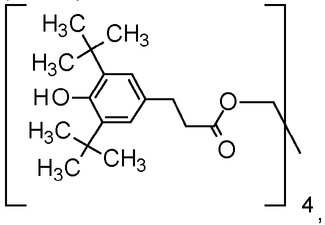 and is for example contained in Irganox 1010 (TM, commercially available from BASF SE). It functions as a long-term heat polymer stabilizer in a polymer.

Preferably, the polymer stabilizer mixture comprises the polymer stabilizers (i-1) and (i-2) in a relative weight ratio of (i-1) : (i-2) = 2 : 1.

Preferably, the polymer stabilizer mixture comprises the polymer stabilizers
(i-1) 63 to 71 wt.% of tris(2,4-ditert-butylphenyl) phosphite (CAS-No. 31570-04-4),
(i-2) 29 to 37 wt.% of tetrakis-[3-(3,5-ditert-butyl-4-hydroxy-phenyl)-propionyloxymethyl]methane (CAS-No. 6683-19-8), and

wt.% of the polymer stabilizers (i-1) and (i-2) are based on the weight of the polymer stabilizer mixture; more preferably
   (i-1) 64 to 70 wt.% of tris(2,4-ditert-butylphenyl) phosphite (CAS-No. 31570-04-4),
   (i-2) 30 to 36 wt.% of tetrakis-[3-(3,5-ditert-butyl-4-hydroxy-phenyl)-propionyloxymethyl]methane (CAS-No. 6683-19-8), and
wt.% of the polymer stabilizers (i-1) and (i-2) are based on the weight of the polymer stabilizer mixture; very preferably
   (i-1) 65 to 69 wt.% of tris(2,4-ditert-butylphenyl) phosphite (CAS-No. 31570-04-4),
   (i-2) 31 to 35 wt.% of tetrakis-[3-(3,5-ditert-butyl-4-hydroxy-phenyl)-propionyloxymethyl]methane (CAS-No. 6683-19-8), and
wt.% of the polymer stabilizers (i-1) and (i-2) are based on the weight of the polymer stabilizer mixture; particularly
   (i-1) 66 to 68 wt.% of tris(2,4-ditert-butylphenyl) phosphite (CAS-No. 31570-04-4),
   (i-2) 32 to 34 wt.% of tetrakis-[3-(3,5-ditert-butyl-4-hydroxy-phenyl)-propionyloxymethyl]methane (CAS-No. 6683-19-8), and
wt.% of the polymer stabilizers (i-1) and (i-2) are based on the weight of the polymer stabilizer mixture.

Preferably, the polymer stabilizer (i-1) or (i-2) is in the form of a powder. More preferably, the polymer stabilizers (i-1) and (i-2) are in the form of a powder. A bulk density of a powder is determined complying to DIN EN ISO 17892-3. Preferably, the polymer stabilizer (i-1) is in the form of a powder and has a bulk density above 300 g/L and below 900 g/L as determined by DIN EN ISO 17892-3, more preferably above 350 g / L and below 600 g / L, very preferably above 380 g / L and below 550 g / L and particularly above 400 g / L and below 500 g / L. Preferably, the polymer stabilizer (i-2) is in the form of a powder and has a bulk density above 300 g/L and below 900 g/L as determined by DIN EN ISO 17892-3, more preferably above 450 g / L and below 700 g / L, very preferably above 480 g / L and below 680 g / L and particularly above 500 g / L and below 650 g / L.

The processing aid, which is a polyethylene, has a weight average molecular weight (Mw) above 2500 Da (Dalton) and below 16000 Da, a number average molecular weight (Mn) and a polydispersity index (PD), which is the ratio between Mw and Mn. Preferably, the weight average molecular weight, the number average molecular weight and the polydispersity index are determined by gel permeation chromatography (GPC), very preferably by a high temperature gel permeation chromatography (HT-GPC) according to ISO 16014-4. At the gel permeation chromatography, a detector is preferably a refractive index detector (RI detector). A solvent is preferably trichlorobenzene. A column temperature is preferably 150 °C. A calibration standard comprises preferably a polystyrene.

Preferably, the weight average molecular weight of the processing aid, which is a polyethylene, is above 3500 Da and below 14000 Da, more preferably above 4500 Da and below 12000 Da, very preferably above 5000 Da and below 10000 Da, particularly above 6000 Da and below 9000 Da, more particularly above 6500 Da and below 8500 Da and very particularly above 7000 Da and below 8000 Da.

Preferably, the number average molecular weight of the processing aid, which is a polyethylene, is above 1800 Da (Dalton) and below 6000 Da, more preferably above 2000 Da and below 5500 Da, very preferably above 2300 Da and below 5000 Da, particularly above 2600 Da and below 4000 Da, more particularly above 2800 Da and below 3500 Da and very particularly above 3000 Da and below 3300 Da.

Preferred is a method, wherein the processing aid possesses a number average molecular weight above 1800 Da and below 6000 Da.

Preferably, the polydispersity index of the processing aid, which is a polyethylene, is above 1.3 and below 7, more preferably above 1.5 and below 5, very preferably above 1.7 and below 4, particularly above 1.9 and below 3.2, more particularly above 2.1 and below 2.7 and very particularly above 2.3 and below 2.5.

Preferred is a method, wherein the processing aid possesses a polydispersity index above 1.3 and below 7.

Preferably, the weight average molecular weight of the processing aid, which is a polyethylene, is above 3500 Da (Dalton) and below 14000 Da and the number average molecular weight is above 1800 Da and below 6000 Da, more preferably the weight average molecular weight is above 4500 Da and below 12000 Da and the number average molecular weight is above 2000 Da and below 5500 Da, very preferably the weight average molecular weight is above 5000 Da and below 10000 Da and the number average molecular weight is above 2300 Da and below 5000 Da, particularly the weight average molecular weight is above 6000 Da and below 9000 Da and the number average molecular weight is above 2600 Da and below 4000 Da, more particularly the weight average molecular weight is above 6500 Da and below 8500 Da and the number average molecular weight is above 2800 Da and below 3500 Da and very particularly, the weight average molecular weight is above 7000 Da and below 8000 Da and the number average molecular weight is above 3000 Da and below 3300 Da.

Preferably, the polydispersity index of the processing aid, which is a polyethylene, is above 1.3 and below 7 and the weight average molecular weight is above 3500 Da and below 14000 Da, more preferably the polydispersity index is above 1.5 and below 5 and the weight average molecular weight is above 4500 Da and below 12000 Da, very preferably the polydispersity index is above 1.7 and below 4 and the weight average molecular weight is above 5000 Da and below 10000 Da, particularly the polydispersity index is above 1.9 and below 3.2 and the weight average molecular weight is above 6000 Da and below 9000 Da, more particularly the polydispersity index is above 2.1 and below 2.7 and the weight average molecular weight is above 6500 Da and below 8500 Da and very particularly the polydispersity index is above 2.3 and below 2.5 and the weight average molecular weight is above 7000 Da and below 8000 Da.

It is understood that the polydispersity index correlates mathematically to the weight average molecular weight and the number average molecular weight. Hence in the following, the provided range for the polydispersity index means that only those specific polydispersity indices are intended, which can be achieved by choosing a suitable specific weight average molecular weight out of the provided range for the weight average molecular weight and by choosing a suitable specific number average molecular weight out of the provided range for the number average molecular weight. Preferably, the polydispersity index of the processing aid, which is a polyethylene, is above 1.3 and below 7, the weight average molecular weight is above 3500 Da (Dalton) and below 14000 Da and the number average molecular weight is above 1800 Da and below 6000 Da. More preferably, the polydispersity index is above 1.5 and below 5, the weight average molecular weight is above 4500 Da and below 12000 Da and the number average weight is above 2000 Da and below 5500 Da. Very preferably, the polydispersity index is above 1.7 and below 4, the weight average molecular weight is above 5000 Da and below 10000 Da and the number average weight is above 2300 Da and below 5000 Da. Particularly, the polydispersity index is above 1.9 and below 3.2, the average molecular weight is above 6000 Da and below 9000 Da and the number average molecular weight is above 2600 Da and below 4000 Da. More particularly, the polydispersity index is above 2.1 and below 2.7, the weight average molecular weight is above 6500 Da and below 8500 Da and the number average molecular weight is above 2800 Da and below 3500 Da. Very particularly, the polydispersity index is above 2.3 and below 2.5, the weight average molecular weight is above 7000 Da and below 8000 Da and the number average molecular weight is above 3000 Da and below 3300 Da.

The processing aid possesses a melting enthalpy, a melting peak temperature and a melting range. The melting enthalpy is determined by a differential scanning calorimetry (DSC) according to EN ISO 11357-3, preferably at atmospheric pressure, e.g. 101.32 kPa. The melting temperature and the melting range are also determined by the differential scanning calorimetry according to EN ISO 11357-3 preferably at atmospheric pressure, e.g. 101.32 kPa. Preferably, the EN ISO 11357-3 at atmospheric pressure is conducted with three consecutive heating cycles with (a) 0 °C to 200 °C at 10 °C / min and 30 mL / min N₂, (b) 200 °C to 0 °C at 10 °C / min and 30 mL / min N₂, (c) 0 °C to 200 °C at 10 °C / min and 30 mL / min N₂.

Preferably, the melting enthalpy of the processing aid is above 118 J / g and below 150 J / g at 101.32 kPa, more preferably above 120 J / g and below 145 J / g, very preferably above 122 J / g and below 140 J / g, particularly above 123 J / g and below 135 J / g, more particularly above 124 J / g and below 132 J / g and very particularly above 125 J/g and below 130 J / g.

Preferred is a method, wherein the processing aid has a melting enthalpy above 118 J / g and below 150 J / g.

Preferred is a method, wherein the processing aid has a melting enthalpy above 118 J / g and below 150 J / g and the melting enthalpy is determined by a differential scanning calorimetry according to EN ISO 11357-3.

Preferably, the melting peak temperature of the processing aid is above 90 °C and below 115 °C, more preferably above 95 °C and below 112 °C, very preferably above 98 °C and below 111 °C, particularly above 100 °C and below 109 °C, more particularly above 102 °C and below 107 °C and very particularly above 104 °C and below 106 °C.

Preferred is a method, wherein the processing aid possesses a melting peak temperature above 90 °C and below 115 °C.

Preferred is a method, wherein the processing aid possesses a melting peak temperature above 90 °C and below 115 °C and the melting peak temperature is determined by a differential scanning calorimetry according to EN ISO 11357-3.

Preferably, the melting range of the processing aid is between 18 °C and 115 °C, more preferably between 20 °C and 114 °C, very preferably between 21 °C and 113 °C, particularly between 23 °C and 113 °C and more particularly between 24°C and 112 °C.

Preferably, the processing aid is in the form of a powder. A bulk density of the powder is determined complying to DIN EN ISO 17892-3. Preferably, the processing aid is in the form of a powder and has a bulk density above 200 g/L and below 800 g/L as determined by DIN EN ISO 17892-3, more preferably above 300 g / L and below 700 g / L, very preferably above 400 g / L and below 600 g / L and particularly above 450 g / L and below 550 g / L.

Preferably, the processing aid is a polyethylene, which is a wax, or in other words a polyethylene wax. Preferably, the processing aid is a polyethylene, which is synthesized from ethylene. More preferably, the processing aid is a polyethylene wax, which is synthesized from ethylene. Preferably, the processing aid is a polyethylene, which is synthesized by a high-pressure polymerization. More preferably, the processing aid is a polyethylene, which is synthesized by a high-pressure polymerization from ethylene. Very preferably, the processing aid is a polyethylene wax, which is synthesized by a high-pressure polymerization from ethylene. Preferably, the processing aid is a polyethylene, wherein possesses long polymeric chains and a branching of the long polymeric chains occurs by long chains ([-CH₂CH₂-]ₙH). Preferably, the processing aid is a polyethylene, which has a density at 23 °C according to DIN 53479 above 0.88 g / cm³ and below 0.95 g / cm³, more preferably above 0.89 g / cm³ and below 0.94 g / cm³, very preferably above 0.90 g / cm³ and below 0.93 g / cm³ and particularly between 0.91 g / cm³ and 0.925 g / cm³. Preferably, the processing aid is a polyethylene, which has a drop point (Ubbelohde) according to DIN 51801 above 95 °C and below 120 °C, more preferably above 98 °C and below 116°C, very preferably above 99 °C and below 114 °C and particularly, the drop point is in a range between 101 °C and 112 °C. Preferably, the processing aid is a polyethylene, which has a melt viscosity at 120 °C according to DIN 53019 above 60 mm² / s and below 400 mm² / s, more preferably above 80 mm² / s and below 350 mm² / s, very preferably above 100 mm² / s and below 300 mm² / s, particularly above 120 mm² / s and below 270 mm² / s and melt viscosity is in range between 135 and 240 mm² / s. Preferably, the processing aid is a polyethylene, which is Luwax AL-3 (TM BASF).

Preferred is a method, wherein the processing aid is a polyethylene, which is a wax.

Preferred is a method for manufacturing a pellet, wherein the mixture for compaction comprises
(i) 88 to 97 wt.% of the polymer stabilizer mixture, and
(ii) 3 to 12 wt.% of the processing aid.

Preferred is a method for manufacturing a pellet, wherein the mixture for compaction comprises
(i) 90 to 97 wt.% of the polymer stabilizer mixture, and
(ii) 3 to 10 wt.% of the processing aid.

Preferred is a method for manufacturing a pellet, wherein the mixture for compaction comprises
(i) 91 to 97 wt.% of the polymer stabilizer mixture, and
(ii) 3 to 9 wt.% of the processing aid.

Preferred is a method for manufacturing a pellet, wherein the mixture for compaction comprises
(i) 89 to 96 wt.% of the polymer stabilizer mixture, and
(ii) 4 to 11 wt.% of the processing aid.

Preferred is a method for manufacturing a pellet, wherein the mixture for compaction comprises
(i) 90 to 96 wt.% of the polymer stabilizer mixture, and
(ii) 4 to 10 wt.% of the processing aid.

Preferred is a method for manufacturing a pellet, wherein the mixture for compaction comprises
(i) 91 to 96 wt.% of the polymer stabilizer mixture, and
(ii) 4 to 9 wt.% of the processing aid.

Preferred is a method for manufacturing a pellet, wherein the mixture for compaction comprises
(i) 87 to 94 wt.% of the polymer stabilizer mixture, and
(ii) 6 to 13 wt.% of the processing aid.

Preferred is a method for manufacturing a pellet, wherein the mixture for compaction comprises
(i) 88 to 94 wt.% of the polymer stabilizer mixture, and
(ii) 6 to 12 wt.% of the processing aid.

Preferred is a method for manufacturing a pellet, wherein the mixture for compaction comprises
(i) 87 to 93 wt.% of the polymer stabilizer mixture, and
(ii) 7 to 13 wt.% of the processing aid.

Preferred is a method for manufacturing a pellet, wherein the mixture for compaction comprises
(i) 88 to 93 wt.% of the polymer stabilizer mixture, and
(ii) 7 to 12 wt.% of the processing aid.

A further ingredient, which is different to the polymer stabilizers (i-1) and (i-2) and to the processing aid, can optionally be contained in the mixture of compaction. A further ingredient comprises a plurality of further ingredients. If so, the further ingredient can be named in general as component (iii), in case of a plurality of further ingredients accordingly component (iv) etc. The further ingredient is preferably only contained in an amount up to 17 wt.% (= 0 to 17 wt.%) based on the overall weight of the mixture for compaction. More preferably, the further ingredient is only contained in an amount up to 15 wt.% (= 0 to 15 wt.%), very preferably in an amount up to 13 wt.% (= 0 to 13 wt.%), particularly in an amount up to 11 wt.% (= 0 to 11 wt.%), more particularly in an amount up to 9 wt.% (= 0 to 9 wt.%), very particularly in an amount up to 7 wt.% (= 0 to 7 wt.%), especially in an amount up to 5 wt.% (= 0 to 5 wt.%), more especially in an amount up to 3 wt.% (= 0 to 3 wt.%), very especially in an amount up to 1 wt.% (= 0 to 1 wt.%). Most especially, the mixture for compaction is free of a further ingredient.

A further ingredient is for example another polymer stabilizer, another processing aid or a filler. Another polymer stabilizer is for example a phenolic antioxidant, which is different to the polymer stabilizer (i-2), an UV absorber, a hindered amine light stabilizer, a metal deactivator, a phosphite, which is different to the polymer stabilizer (i-1), a phosphonite, a hydroxylamine or amine N-oxide, a thiosynergist, an acid scavenger or a peroxide scavenger. Another processing aid is for example an oleamide, erucamide, behenamide or glyceryl monostearate. A filler is for example silica, talc or wollastonite. Preferably, the further ingredient has a light absorption maximum at a wavelength below 380 nm, more preferably below 350 nm, very preferably below 300 nm, particularly below 280 nm, more particularly below 260 nm and very particularly no light absorption maximum above 250 nm. The further ingredient is preferably in the solid form. Preferably, the further ingredient is in the form of a powder. A bulk density of the powder is determined complying to DIN EN ISO 17892-3. More preferably, the further ingredient is in the form of a powder and has a bulk density above 200 g / L and below 950 g / L.

An epoxide compound is herein defined as a molecule, which contains at least one epoxide group, i.e. a three-membered ring structure of two carbon atoms and one oxygen atom, which are covalently linked to each other. This three-membered ring structure is also called oxirane or oxacyclopropane. Some epoxide compounds comprise two or more epoxide groups and therefore can be considered as polyfunctional epoxide compounds or simplified as polyfunctional epoxide. Sometimes an epoxide compound is also called epoxy compound. There are epoxide compounds, which are solid at room temperature. Preferably, an amount of an epoxide compound, which is solid at room temperature, in the mixture for compaction is only equal to or below 10 wt.% (= 0 - 10 wt.%) and wt.% is based on weight of the mixture for compaction. More preferably, the amount of an epoxide compound, which is solid at room temperature, is at most equal to or below 5 wt.% (= 0 - 5 wt.%), very preferably at most equal to or below 2 wt.% (= 0 - 2 wt.%), particularly at most equal to or below 1 wt.% (= 0 - 1 wt.%) and more particularly, the mixture for compaction is free of an epoxide compound, which is solid at room temperature. Preferably, an amount of an epoxide compound in the mixture for compaction is at most equal to or below 10 wt.% (= 0 - 10 wt.%) and wt.% is based on weight of the mixture for compaction. More preferably, the amount of an epoxide compound is at most equal to or below 5 wt.% (= 0 - 5 wt.%), very preferably at most equal to or below 2 wt.% (= 0 - 2 wt.%), particularly at most equal to or below 1 wt.% (= 0 - 1 wt.%) and more particularly, the mixture for compaction is free of an epoxide compound.

The polymer stabilizer mixture is preferably in a solid form. More preferably, the polymer stabilizer mixture is in the form of a powder. The processing aid is preferably in a solid form. More preferably, the processing aid is in the form of a powder. The mixture for compaction is preferably in a solid form. More preferably, the mixture for compaction is in the form of a powder.

Preferably, the mixture for compaction is obtained by a physical mixing in one step of the polymer stabilizers (i-1) and (i-2), the processing aid and optionally a further ingredient. More preferably, the mixture for compaction in the form of a powder is obtained by a physical mixing of the polymer stabilizers (i-1) and (i-2) in the form of powders and the processing aid in the form of a powder and optionally a further ingredient in the form of a powder. The physical mixing is preferably free of a complete melting of all the polymer stabilizers (i-1) and (i-2). The physical mixing is preferably free of a complete melting of the polymer stabilizer (i-2). The physical mixing is preferably free of a complete melting of the processing aid. The physical mixing is preferably free of a complete melting of an optional further ingredient. The physical mixing is preferably conducted at a temperature between 0 °C and 50 °C, more preferably between 5 °C and 45 °C, very preferably between 10 °C and 40 °C, particularly between 15 °C and 35 °C, more particularly between 20 °C and 30°C and very particularly at room temperature. The physical mixing of the mixture for compaction is preferably free of dissolving at least one out of the polymer stabilizers (i-1), (i-2) and the processing aid in a solvent. The solid particles of the powders of polymer stabilizers (i-1), (i-2) and the processing aid are homogeneously distributed in the mixture for compaction. The physical mixing can be conducted in batches or continuously, for example by using a blender. Another option of mixing in two steps is to first obtain the polymer stabilizer mixture and then second to obtain the mixture for compaction by a physical mixing of the polymer stabilizer mixture and the processing aid. Preferably, the polymer stabilizer mixture is obtained by a physical mixing of the polymer stabilizers (i-1) and (i-2) and optionally a further ingredient. More preferably, the polymer stabilizer mixture in the form of a powder is obtained by a physical mixing of the polymer stabilizers (i-1) and (i-2) in the form of powders and optionally a further ingredient in the form of a powder. The physical mixing is preferably free of a complete melting of all the polymer stabilizers (i-1) and (i-2). The physical mixing is preferably free of a complete melting of the polymer stabilizer (i-2). The physical mixing is preferably free of a complete melting of an optional further ingredient. The physical mixing is preferably conducted at a temperature between 0 °C and 50 °C, more preferably between 5 °C and 45 °C, very preferably between 10 °C and 40 °C, particularly between 15 °C and 35 °C, more particularly between 20 °C and 30°C and very particularly at room temperature. The physical mixing of the mixture for compaction is preferably free of dissolving at least one out of the polymer stabilizers (i-1) and (i-2) in a solvent. Preferably, the solid particles of the powders of polymer stabilizers (i-1) and (i-2) are homogeneously distributed in the polymer stabilizer mixture. The physical mixing of the polymer stabilizer mixture can be conducted in batches or continuously, for example by using a blender. Another option is to first obtain the polymer stabilizer mixture and then obtain the mixture for compaction by a physical mixing of the polymer stabilizer mixture and the processing aid. It is preferred to obtain the mixture for compaction by a physical mixing in one step of the polymer stabilizers (i-1) and (i-2), the processing aid and optionally a further ingredient.

The mixture for compaction is the feed material in the method of manufacturing a pellet in a pellet mill. The mixture for compaction is typically continuously dosed to a section of the pellet mill comprising the die with the nozzle and the roller by gravity. If the temperature of the mixture for compaction at its dosing to the section of the pellet mill comprising the die with the nozzle and the roller is too high, a pasty mass forms at the roller area, which can lead to a failure of the method of manufacturing. The temperature of the mixture for compaction at dosing is preferably below 40°C, more preferably between 0 °C and 38 °C, very preferably between 5 °C and 36 °C, particularly between 10 °C and 35°C, more particularly between 15 °C and 32 °C, very particularly between 20 °C and 30 °C, and especially the dosing occurs at room temperature. The roller pre-compacts and degasses the feed material and presses the feed material through the nozzle. A cylindrical strand is formed. In more detail, the mixture for compaction as the feed material is further compacted in the feed zone of the nozzle, which can be cone-shaped, and begins to heat up and to sinter in a longish, typically cylindrically formed, channel of the nozzle by friction on the surface of the nozzle. The relevant surface of the nozzle is the surface of the channel, which is typically cylindrical, of the nozzle along the smallest diameter of the channel. The smallest diameter of the nozzle is herein defined as nozzle diameter. The press length is defined herein as the distance, where the smallest diameter of the cylindric channel applies. The cylindric channel of the nozzle might expand after the press length, but the expanded part of the cylindric channel does not contribute for building up friction by the feed material. The nozzle diameter and the pressing length are parameters, which are influencing the degree of sintering. The comminuting of the strand to obtain pellets occurs for example with a cutting knife as a comminuting device in an adjusted distance from the outer side of the die. The cutting knife cuts respectively breaks the strand to pellets with a varying length of typically 1 to 3 times of the nozzle diameter. Subsequently, the pellets are cooled and can be sieved, for example with a 1.6 mm sieve, which is for example done in a vibrating sieve. The sieved fines fraction consisting essentially of the mixture for compaction in a partly compacted form might be reused directly again as feed material or reused after a grounding. A more detailed description is provided in the experimental part at section E). It is noted that two or more steps (A) can occur prior to step (B), i.e. two or more pressings occur prior to a comminuting of the formed strand. A parameter for this is the distance between the ending of the press length and the comminuting device, for example the cutting knife.

Prior to step (A), the mixture for compaction is fed into the section of the pellet mill, which comprises the die with the nozzle and the roller. The mixture for compaction is preferably fed into the pellet mill in the form of a powder. This occurs preferably by gravity.

Preferred is a method for manufacturing a pellet, wherein the method comprises a step
(pre-A) feeding the mixture for compaction into the pellet mill, wherein the mixture for compaction is in the form of a powder,
and the step (pre-A) occurs before the step (A).

The formed strand has a surface temperature, which is increased after leaving the nozzle versus the surrounding temperature by the occurred friction. The surface temperature of the strand is determined for example by measurement of its infrared irradiation. Preferably, the surface temperature of the strand is above 45 °C and below 110 °C, more preferably above 50 °C and below 80 °C, particularly above 53 °C and below 75 °C, very particularly above 55 °C and below 73 °C.

Preferred is a method for manufacturing a pellet, wherein the strand has a surface temperature above 45 °C and below 110 °C.

A pellet mill is preferably a ring die pellet mill or a flat die pellet mill. At a gear-type pellet mill, two gear wheels are acting as a roller and forming a nozzle and die equivalent by a spur-gearing situation between the gear-wheals, which leads to a compression and compaction of the mixture for compaction.

At a flat die pellet mill, there is also a variant with a rotating flat die and a stationary roller.

Preferred is a method for manufacturing a pellet, wherein the pellet mill is a ring die pellet mill, wherein the die has a geometric form of a ring with an inner side and an outer side and the nozzle represent a pass from the inner side to the outer side, or the pellet mill is a flat die pellet mill, wherein the die has a geometric form of a planar plate with an upper side and a lower side and the nozzle represents a pass from the upper side to the lower side.

Preferred is a method for manufacturing a pellet, wherein at the ring die pellet mill, the ring is rotating and the roller possesses a rotation axis, which is stationary, and at the flat die pellet mill, the die is stationary and the roller possesses a rotation axis, which is rotating.

The main factor for an amount of mechanical energy input is the ratio of the press length of a nozzle to the nozzle's nozzle diameter. For example, the surface temperature is influenced by a chosen press length of the nozzle and the nozzle diameter. Preferably, the ratio of the press length to the nozzle diameter is from 2 to 8, very preferably from 3 to 7, particularly from 4 to 6 and very particularly 5.

Preferred is a method for manufacturing a pellet, wherein the nozzle has a nozzle diameter and a press length, and a ratio of the press length to the nozzle diameter is from 2 to 8.

A roller, preferably two or more rollers, very preferably two or three rollers, are typically driven by friction between the roller, the mixture for compaction and the die. A smooth surface of the roller can lead to a slipping of the roller. A too high degree of slipping, which could lead to a failure of the method for manufacturing, is reduced by a corrugated surface of the roller. At a flat die pellet mill, there is also an option to drive the rollers by a kind of gear to control the degree of slipping or to avoid it.

Preferred is a method for manufacturing a pellet, wherein the roller surface is corrugated.

At the ring die pellet mill, another factor for an amount of mechanical energy input is the speed of the rotation of the ring die respectively its rotation frequency. At the flat die pellet mill, another factor for an amount of mechanical energy input is the speed of the roller in relation to the stationary die respectively the rotation frequency of the roller around its rotation axis. As a roller of the flat die pellet mill runs on a round die, there is only one line on the roller that has exactly the same speed as the die (relative speed = 0). The part of the roller that is on the inner circle runs faster and the part of the roller that is on the outer circle runs slower. This means there is a small relative speed between roller and die which leads to a kind of milling of the material in this section.

Preferred is a method for manufacturing a pellet, wherein the pellet mill is a ring die pellet mill.

The number of dies at a pellet mill is driven by its construction design and engineering considerations thereof. Preferably, the pellet mill comprises one die. The number of rollers at a pellet mill is driven by its construction design and engineering considerations thereof. A higher number of rollers allow that in case of a die having two or more nozzles, which are located opposite to each other at the die, the steps (A) and (B) can occur more often over a certain time period at the pellet mill. The pellet mill comprises preferably two or more rollers, very preferably two, three or four rollers, particularly two or three rollers and very particularly two rollers. The number of nozzles at a die is driven by its construction design and engineering considerations. A higher number of nozzles at a die enables that the step (A) is occurring at individual nozzles in parallel or afterwards, which leads to the formation of two or more strands in parallel. Afterwards means here that a step (A) occurs at another nozzle prior to that a step (A) is repeated at the initially first nozzle again. Step (B) occurs then in principle in parallel, i.e. comminuting of the two or more strands occurs in principle in parallel. Thus, two or more pellets are obtained in principle in parallel. Hence, the output of the number of pellets in a certain time period increases significantly. The die of the pellet mill comprises preferably two or more nozzles, very preferably 48 to 20000, particularly 96 to 16000, very particularly 360 to 14000, especially 720 to 12000, very especially 1440 to 11000 and most especially 3600 to 10000.

Preferred is a method for manufacturing a pellet, wherein the pellet mill comprises two rollers.

Preferred is a method for manufacturing a pellet, wherein the pellet mill comprises a ring with two or more nozzles.

Preferred is a method for manufacturing a pellet, wherein the pellet mill comprises a flat die with two or more nozzles.

Preferred is a method for manufacturing a pellet, wherein the pellet mill comprises one ring.

Preferred is a method for manufacturing a pellet, wherein the pellet mill comprises one flat die.

Preferred is a method for manufacturing a pellet, wherein the pellet mill comprises two or more rollers and the die comprises two or more nozzles.

Preferred is a method for manufacturing a pellet, wherein the pellet mill comprises one die, two or more rollers and the die comprises two or more nozzles.

Preferred is a method for manufacturing a pellet, wherein the pellet mill comprises one die, two or more rollers and the die comprises two or more nozzles and the step (A) occurs at a first one of the two or more nozzles and at the same time or afterwards at a second one of the two or more nozzles but before step (A) occurs again at the first one of the two or more nozzles.

The pellet obtainable from the method for compaction comprises
(i) 87 to 97 wt.% of a polymer stabilizer mixture, which comprises the polymer stabilizers
   (i-1) 62 to 72 wt.% of tris(2,4-ditert-butylphenyl) phosphite (CAS-No. 31570-04-4),
   (i-2) 28 to 38 wt.% of tetrakis-[3-(3,5-ditert-butyl-4-hydroxy-phenyl)-propionyloxymethyl]methane (CAS-No. 6683-19-8), and
   wt.% of the polymer stabilizers (i-1) and (i-2) are based on the weight of the polymer stabilizer mixture, and
(ii) 3 to 13 wt.% of a processing aid, which is a polyethylene and which possesses a weight average molecular weight above 2500 Da and below 16000 Da,
and wt.% of the components (i) and (ii) are based on the weight of the pellet.

The weight percentages of the components (i) and (ii) of the pellet are based on the weight of the pellet. Accordingly, the weight percentages of all components contained in the pellet, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.

The pellet has preferably a shape of a round rod. The shape of the round rod is idealized a cylinder, however the two base areas of the cylinder are in case of the pellet not always planar and parallel to each other, particularly not planar and parallel to each other. This is due to the comminuting the strand of the strand at step (B), which includes more elements of breaking than in case a strand, which is homogeneously warmed to a temperature above 110 °C is hot-cutted by a knife. The round rod has a diameter of a circle. Preferably, the round rod has a diameter of a circle, which is between 2 mm and 4 mm, very preferably 3 mm. A length of the pellet is herein understood as the longest distance in the direction of the strand formation in the nozzle, i.e. the axis of the pellet, which is defined by having in average the same distance to points of the pellet surface excluding those points at the surface of the pellet, which are generated through comminuting the strand. In case of a round rod, the axis of the pellet is the rotational axis of the round rod. A pellet has preferably a length of 1 to 3 times of the diameter of a circle. While one pellet has a specific length value itself, a plurality of pellets can have an average length of the pellets. This is caused by step (B) occurring by cutting with elements of breaking. Beneath the distance of the comminuting device at step (B), the design of the nozzle and its nozzle channel plays a role. One option is that the press length of the nozzle is followed by a section with a diameter, which is larger than the diameter of the nozzle. Hence, the nozzle comprises a channel with a press length section and an expanded section, which follows after the press length section. The expanded section allows that a desired thickness of the die is larger than the press length of the nozzle. A certain thickness of the die might be desired for mechanical strength reasons of the die, for example to avoid a breaking of the die.

A possible step (C) is a sieving of the pellets from step (B), for example with a 1.6 mm sieve. This removes fines originating from the method of manufacturing a pellet, for example at its step (B).

A possible step (D) is a cooling of the pellets. For example, a cooling leads to a pellet temperature, which is similar to a temperature surrounding the pellet mill. The temperature surrounding the pellet mill is preferably room temperature, more preferably 23 °C. This cooling might already partly or completely take place while conducting the possible step (C). A cooling can be supported by a flow of air.

Alternatively, cooling of the pellets from step (B) is conducted before a sieving of the pellets. A possible step (C') is a cooling of the pellets from step (B). For example, a cooling leads to a pellet temperature, which is similar to a temperature surrounding the pellet mill. The temperature surrounding the pellet mill is preferably room temperature, more preferably 23 °C. A possible step (D') is a sieving of the pellets from step (C'), for example with a 1.6 mm sieve.

The above described definitions and preferences for a method of manufacturing a pellet in a pellet mill, for the mixture for compaction, for a polymer stabilizer mixture and for the pellet are described for a method of manufacturing a pellet in a pellet mill. These definitions and preferences apply also to the further embodiments of the invention.

A further embodiment of the invention is a mixture for compaction, which comprises
(i) 87 to 97 wt.% of a polymer stabilizer mixture in the physical form of a powder, which comprises the polymer stabilizers
   (i-1) 62 to 72 wt.% of tris(2,4-ditert-butylphenyl) phosphite (CAS-No. 31570-04-4),
   (i-2) 28 to 38 wt.% of tetrakis-[3-(3,5-ditert-butyl-4-hydroxy-phenyl)-propionyloxymethyl]methane (CAS-No. 6683-19-8), and
   wt.% of the stabilizers (i-1) and (i-2) are based on the weight of the polymer stabilizer mixture, and
(ii) 3 to 13 wt.% of a processing aid in the physical form of a powder, which is a polyethylene and which possesses a weight average molecular weight above 2500 Da and below 16000 Da,
and wt.% of the components (i) and (ii) are based on the weight of the mixture for compaction.

The weight percentages of the components (i) and (ii) of the mixture for compaction are based on the weight of the mixture for compaction. Accordingly, the weight percentages of all components contained in the mixture for compaction, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.

The mixture for compaction is preferably in the form of a powder.

A further embodiment of the invention is a pellet, which comprises the components
(i) 87 to 97 wt.% of a polymer stabilizer mixture, which comprises the polymer stabilizers
   (i-1) 62 to 72 wt.% of tris(2,4-ditert-butylphenyl) phosphite (CAS-No. 31570-04-4),
   (i-2) 28 to 38 wt.% of tetrakis-[3-(3,5-ditert-butyl-4-hydroxy-phenyl)-propionyloxymethyl]methane (CAS-No. 6683-19-8), and
   wt.% of the stabilizers (i-1) and (i-2) are based on the weight of the polymer stabilizer mixture, and
(ii) 3 to 13 wt.% of a processing aid, which is a polyethylene and which possesses a weight average molecular weight above 2500 Da and below 16000 Da,
and wt.% of the components (i) and (ii) are based on the weight of the pellet.

The weight percentages of the components (i) and (ii) of the pellet are based on the weight of the pellet. Accordingly, the weight percentages of all components contained in the pellet, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.

Preferred is a pellet, which has a shape of a round rod and the round rod has a diameter of a circle, which is between 2 mm and 4 mm.

Preferred is a pellet, which has a length of 1 to 3 times of the diameter of a circle.

A further embodiment of the invention is a method for manufacturing a stabilized polymer, which comprises the steps of
(AP) dosing a pellet into a polymer to obtain a pellet-polymer mixture,
(BP) exposing the pellet-polymer mixture to a temperature in the range of 120 to 340°C under mechanical stirring to obtain a stabilized polymer,
wherein the polymer is a polyolefin, a polystyrene or a mixture thereof,
wherein the pellet comprises
   (i) 87 to 97 wt.% of a polymer stabilizer mixture, which comprises the polymer stabilizers
      (i-1) 62 to 72 wt.% of tris(2,4-ditert-butylphenyl) phosphite (CAS-No. 31570-04-4),
      (i-2) 28 to 38 wt.% of tetrakis-[3-(3,5-ditert-butyl-4-hydroxy-phenyl)-propionyloxymethyl]methane (CAS-No. 6683-19-8), and
      wt.% of the stabilizers (i-1) and (i-2) are based on the weight of the polymer stabilizer mixture, and
   (ii) 3 to 13 wt.% of a processing aid, which is a polyethylene and which possesses a weight average molecular weight above 2500 Da and below 16000 Da,
   and wt.% of the components (i) and (ii) are based on the weight of the pellet.

The weight percentages of the components (i) and (ii) of the pellet are based on the weight of the pellet. Accordingly, the weight percentages of all components contained in the pellet, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.

At step (AP), the size of the pellet is preferably a well-fitting size, since a too large pellet is more difficult to dose, to blend and to disperse in the polymer.

At step (BP), the pellet components are homogeneously dispensed and/or dissolved in the polymer to be stabilized under mechanical stirring. This is supported by the heat exposure of the the pellet-polymer mixture, which leads to a lowering of the viscosity of the polymer on one side and a melting of pellet components on the other side, if the respective melting range of a component is reached. Preferably, the temperature at step (BP) is in the range from 135 °C to 330 °C, very preferably from 150 °C to 310 °C, particularly from 180 °C to 300 °C, very particularly from 190 °C to 290 °C, especially from 200 °C to 280 °C and very especially from 210 °C to 260 °C.

A polyolefin is for example:
1. A homopolymer of mono-olefins and di-olefins, for example polypropylene, polyisobutylene, poly-but-1-ene, poly-4-methylpent-1-ene, polyvinylcyclohexane, polyisoprene or polybutadiene, as well as polymers of cycloolefins, for instance of cyclopentene or nor-bornene, polyethylene, for example high density polyethylene (HDPE), medium density polyethylene (MDPE), low density polyethylene (LDPE), linear low density polyethylene (LLDPE), or a mixture thereof, for example mixtures of polypropylene with polyisobutylene, polypropylene with polyethylene (for example PP/HDPE, PP/LDPE) or mixtures of different types of polyethylene (for example LDPE/HDPE).
2. A copolymer of mono-olefins or di-olefins with each other or with other vinyl monomers, for example ethylene/propylene copolymers, propylene/but-1-ene copolymers, propyl-ene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers, for example ethylene/norbornene like COC, ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another, or mixtures with other polyolefins, for example polypropylene/ethylene-propylene copolymers, LDPE/ethylene-vinyl acetate copolymers (EVA), or LDPE/ethylene-acrylic acid copolymers (EAA).

Polyolefins of mono-olefins, preferably polyethylene and polypropylene, can be prepared by different, and especially by the following methods:
a) radical polymerisation (normally under high pressure and at elevated temperature)
b) catalytic polymerisation using a catalyst that normally contains one or more than one metal of groups 4, 5, 6 (for example chromium) or 7 of the Periodic Table. These metals usually have one or more than one ligand, typically oxides, halides, alcoholates, esters, ethers, amines, alkyls, alkenyls and/or aryls that may be either pi- or sigma-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups 1, 2 and/or 3 of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).

A polystyrene is for example:
1. A homopolymer of styrene.
2. A copolymer of styrene and a co-monomer, which is for example ethylene, propylene, dienes, nitriles, acids, maleic anhydrides, maleimides, vinyl acetate, acrylic derivatives and mixtures thereof, for example styrene/butadiene, styrene/acrylonitrile, styrene/ethylene, styrene/alkyl methacrylate, styrene/butadiene/alkyl acrylate, styrene/butadiene/alkyl methacrylate, styrene/maleic anhydride, styrene/acrylonitrile/methyl acrylate, block copolymers of styrene with a co-monomer, for example styrene/butadiene/styrene, strene/isoprene/styrene, styrene/ethylene/butylene/styrene or styrene/ethylene/propylene/styrene.
3. Graft copolymers of styrene, for example styrene on polybutadiene, styrene on polybutadiene-styrene or polybutadiene-acrylonitrile copolymers, styrene and acrylonitrile on polybutadiene, styrene, acrylonitrile and methyl methacrylate on polybutadiene, styrene and maleic anhydride on polybutadiene, styrene, acrylonitrile and maleimide on polybutadiene, styrene and maleimide on polybutadiene, styrene and alkyl acrylates or methacrylates other than methyl acrylate on polybutadiene, styrene and acrylonitrile on ethylene/propylene/- diene terpolymers, styrene and acrylonitrile on polyalkyl acrylates or polyalkyl methacrylates, styrene and acrylonitrile on acrylate/butadiene copolymers.

At a copolymer of a polyolefin, at least two different monomers are copolymerized. Preferred is a copolymer of a polyolefin, wherein the weight content of the polymerized olefinic monomer is above 50% based on the weight of all polymerized monomers. At a copolymer of a polystyrene, at least two different monomers are copolymerized or one monomer is grafted on at least a different monomer, which has been polymerized. Preferred is a copolymer of a polystyrene, wherein the weight content of polymerized or grafted styrene is above 50% based on the weight of all polymerized or grafted monomers.

Preferably, the polymer, which is a polyolefin, a polystyrene or a mixture thereof, is thermoplastic, i.e. it can be shaped into a new form at an elevated temperature, for example at a temperature in the range from 120 °C to 340 °C, especially from 135 °C to 330 °C.

The polymer, which is a polyolefin, a polystyrene or a mixture thereof, is susceptible to oxidative, thermal or light-induced degradation.

An amount of pellets to be dosed to the polymer, which is a polyolefin, a polystyrene or a mixture thereof, varies with the particular polymer and the desired degree of protection against oxidative, thermal or light-induced degradation. Preferably, the amount of pellets in weight percent is from 0.01 to 5 wt.% based on the weight of the polymer, very preferably from 0.02 to 3 wt.%, particularly from 0.04 to 2 wt.%, very particularly from 0.05 to 1 wt.%, especially from 0.08 to 0.8 wt.% and very especially from 0.1 to 0.4 wt.%.

Preferred is a method for manufacturing a stabilized polymer, wherein step (BP) takes place in an extruder or a co-kneader.

At step (AP), the pellet can be dosed to the polymer, which has already a polymer temperature in the range of 120 to 340 °C. For example, the pellet is dosed to the polymer, which is already warmed in the extruder or co-kneader. For example, the pellet is introduced by a feeder, which is for example an extruder, into the already warm and viscous polymer to be stabilized. Accordingly, the pellet-polymer mixture has immediately the temperature of the polymer temperature in the range of 120 to 340 °C and the pellet starts to disintegrate.

Preferred is a method for manufacturing a stabilized polymer, wherein the polymer to which the pellet is dosed in step (AP) has a polymer temperature in the range of 120 to 340°C.

At step (AP), the pellet can be dosed to the polymer, which has a polymer temperature below 40 °C. In case the polymer is present in the form of pellets, a pellet-polymer mixture is generated, which comprises the components (a) pellets and (b) polymer pellets. Pellets of a polymer have for example the geometric form of a cylinder and are obtained for example by hot-cutting of an extruded warm polymer strand followed by cooling in a water quench. A pellet-polymer mixture obtained in step (AP), wherein the polymer is in the form of pellets, can be prepared and stored independently from step (BP) or prepared directly before step (BP).

Preferred is a method for manufacturing a stabilized polymer, wherein the polymer to which the pellet is dosed in step (AP) is present in the form of pellets and has a polymer temperature below 40 °C.

The definitions and preferences described for a method of manufacturing a stabilized polymer or applying thereto apply also to the further embodiments of the invention.

A further embodiment of the invention is a use of a pellet for a dust-free handling of its components at manufacturing of a stabilized polymer, wherein the polymer is a polyolefin, a polystyrene or a mixture thereof and wherein the pellet comprises
(i) 87 to 97 wt.% of a polymer stabilizer mixture, which comprises the polymer stabilizers
   (i-1) 62 to 72 wt.% of tris(2,4-ditert-butylphenyl) phosphite (CAS-No. 31570-04-4),
   (i-2) 28 to 38 wt.% of tetrakis-[3-(3,5-ditert-butyl-4-hydroxy-phenyl)-propionyloxymethyl]methane (CAS-No. 6683-19-8), and
   wt.% of the stabilizers (i-1) and (i-2) are based on the weight of the polymer stabilizer mixture, and
(ii) 3 to 13 wt.% of a processing aid, which is a polyethylene and which possesses a weight average molecular weight above 2500 Da and below 16000 Da,
and wt.% of the components (i) and (ii) are based on the weight of the pellet.

The weight percentages of the components (i) and (ii) of the pellet are based on the weight of the pellet. Accordingly, the weight percentages of all components contained in the pellet, which includes the components (i) and (ii), summarizes to overall 100 wt.%. In other words, the sum of all components is 100 wt.%. The sum of all components comprises beneath the components (i) and (ii) also a potential further ingredient. The sum of components (i) and (ii) is below or equal to 100 wt.%.
Fig. 1 shows pellets obtained from example D-1-1, which are placed on a millimeter paper.
Fig. 2 shows pellets obtained from example E-1-2, which are placed on a millimeter paper.
Fig. 3 shows pellets obtained from example E-1-3, which are placed on a millimeter paper.
Fig. 4 shows pellets obtained from example E-1-4, which are placed on a millimeter paper.
Fig. 5 shows pellets obtained from example E-1-5, which are placed on a millimeter paper.
Fig. 6 shows pellets obtained from example E-1-6, which are placed on a millimeter paper.
Fig. 7 shows pellets obtained from example E-1-7, which are placed on a millimeter paper.
Fig. 8 shows pellets obtained from example E-1-8, which are placed on a millimeter paper.
Fig. 9 shows pellets obtained from example E-1-9, which are placed on a millimeter paper.

The following examples illustrate further the invention without limiting it. Percentage values are percentage by weight if not stated differently.

### A) methods for characterization

Mean particle size is determined, if not otherwise stated, by a Camsizer P4 from the Company Retsch Technology GmbH via digital image analysis. The measuring principle is a dynamic image analysis according to ISO 13322-2.

Bulk density is measured complying to DIN EN ISO 17892-3.

Melt flow index of a polymer is measured according to ISO 1133 on a Goettfert MI-Robo with the specifically stated parameters.

Differential scanning calorimetry (DSC) is measured according to EN ISO 11357-3 at atmospheric pressure. Heating cycles are (a) 0 °C to 200 °C at 10 °C / min and 30 mL / min N₂, (b) 200 °C to 0 °C at 10 °C / min and 30 mL / min N₂, (c) 0 °C to 200 °C at 10 °C / min and 30 mL / min N₂. Melting range, melting peak temperature and melting enthalpy are determined at heating cycle (c).

High temperature gel permeation chromatography (HT-GPC) is measured according to ISO 16014-4. As an apparatus, an Agilent PL-GPC 220 with RI detector is used. As a precolumn, one Agilent PFgel Olexis Guard 50 x 7.5 mm column (part No. PL1110-1400) is used. As columns, three Agilent PLgel Olexis 13 µm 300 x 7.5 mm columns (part No. PL1110-6400) are used. The column temperature is 150 °C. The calibration standards are polystyrene and High EasiVial GPC/SEC calibration standards from Agilent (part No. PL2010-0201 and part No. PL2010-0202). Trichlorobenzene is used as the eluent with a flow rate of 1 mL / min, a sample concentration of 3 mg / mL and an injection volume of 200 µL. A determined number average molecular weight Mn and a determined weight average molecular weight Mw are used to calculate a polydispersity index (PD) as the ratio between Mw and Mn.

Sieve analysis is conducted by a Camsizer P4 from the company Retsch Technology GmbH via digital image analysis. The measuring principle is a dynamic image analysis according to ISO 13322-2) with D10, D50 and D90 values.

The Norner attrition test is a test using a vibrating sieve shaker and glass beads to mechanically treat the tested form. An initial sieve analysis is conducted for 1 minute followed by further sieving using glass balls on the sieve decks to mechanically impact the material and measure the change of the sieve fractions after 5, 10 and 20 minutes. Sieves selected are bottom up: 200 µm, 500 µm, 1 mm, 1.6 mm, 2.5 mm and 4 mm. The used glass balls (company Sigmund Lind-ner GmbH, type P) are of 16 mm ± 0.02 mm, weight 5.36 g/glass ball and made of soda lime glass with fine matt surface.

The test procedure is as follow:
1. The sieve shaker without glass beads is charged with 50 g of a sample and the sieving with amplitude 1 mm is conducted for 1 minute. Measuring of mass on each sieve tray and sieve pan.
2. Add 8 glass balls on sieve 500 µm; 9 glass balls on sieve 1.0 mm, 10 on sieve 1.6 mm and 11 on sieve 2.5 mm. Proceed sieving for 5 minutes then measure mass on each sieve tray and sieve pan.
3. Proceed sieving for another 5 minutes, repeat weighing procedure.
4. Proceed sieving for another 10 minutes, repeat weighing procedure.

A Retsch Sieve Shaker AS 200 control from the company Retsch GmbH is used as sieve shaker.

Total fines are the sum of all material, which is collected from bottom plate and 200 µm mesh sieve. Accordingly, the fragments of a sample, which are generated under attrition stress and fall through a 500 µm mesh sieve (< 500 µm), are considered fines. The particle size fraction in wt.% < 500 µm after 20 minutes is the key result (Norner value) to determine abrasion and impact resistance of the tested form. The range of results can vary from 0% for extremely stable to 100% for extremely unstable.

An average weight of pellets is measured by taking a certain number of pellets (around 60 pellets), weighing the certain number of pellets to obtain an overall weight and dividing the overall weight by the certain number of the pellets.

An average length of the pellets is calculated by multiplying the average weight of pellets with an assumed density of 0.95 g / cm³ and dividing by the circular area of a circle with a pellet diameter of 3 mm.

### B) starting material

### SM-PS-1: Irgafos 168

Irgafos 168 (TM, commercially available from BASF SE, melting point between 180-183 °C), which contains tris(2,4-ditert-butylphenyl) phosphite (CAS-No. 31570-04-4) as depicted below 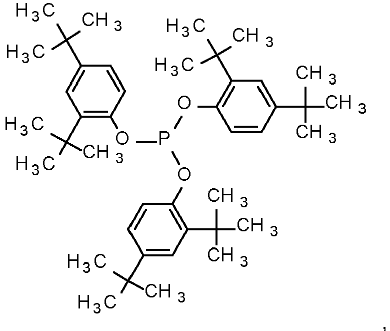 in the form of a powder, i.e. a loose bulk material with a bulk density of 467 g/L and a mean particle size of 400 µm.

### SM-PS-2: Irganox 1010

Irganox 1010 (TM, commercially available from BASF SE, melting point between 113-126 °C), which contains tetrakis-[3-(3,5-ditert-butyl-4-hydroxy-phenyl)-propionyloxymethyl]methane (CAS-No. 6683-19-8) as depicted below 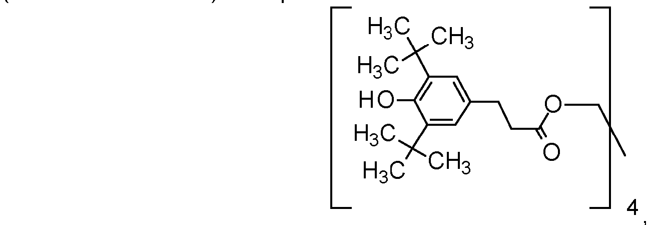 in the form of a powder, i.e. a loose bulk material with a bulk density of 530-630 g/L and a mean particle size of 141 µm.

### SM-PA-1: Licocene PP 1302

Licocene PP 1302 (TM, commercially available from Clariant, employed commercial technical form: fine grain) is a propylene-ethylene copolymer wax (CAS-No. 9010-79-1), which is synthesized with a metallocene catalyst from propylene and ethylene. Branching of the long polymeric chains occurs by short chains (-CH₃). Some physical-chemical properties are measured and depicted in table B-1.

Technical data sheet states a density at 23°C according to ISO 1183 of 0.87 g / cm³.

Technical data sheet states a drop point according to ASTM D 3954 of 87-93 °C.

Technical data sheet states a viscosity at 170 °C according to DIN 53019 of 150-250 mPas. Sieve analysis of the material in the technical form fine grain is measured and depicted in table B-2. A bulk density of 338 g / L is measured. The material in its technical form fine grain is employed for compaction.

### SM-PA-2: Petrolite EP-700

Petrolite EP-700 (TM, commercially available from Baker Hughes) is a propylene-ethylene copolymer wax (CAS-No. 9010-79-1). Controlled branching of the long polymeric chains occurs by short chains from propylene (-CH₃). Some physical-chemical properties are measured and depicted in table B-1.

Technical data sheet states a drop melting point according to ASTM D-127 of 96 °C.

Technical data sheet states a viscosity at 99 °C of 12 pcs (120 mPas).

Petrolite EP-700 is milled in a disc mill PF 300 from Pallmann. Sieve analysis of the obtained ground material is measured and depicted in table B-2. A bulk density of the ground material of 473 g / L is measured. The ground material is employed for compaction.

### SM-PA-3: Dow PG 7008

Dow PG 7008 (TM, commercially available from Dow Chemicals) is a low density polyethylene (CAS-No. 9002-88-4). Some physical-chemical properties are measured and depicted in table B-1.

Technical data sheet states a density at 23 °C according to ASTM D-792 of 0.918 g / cm³.

Technical data sheet states a melting temperature (DSC) of 106 °C.

Technical data sheet states a vicat softening temperature according to ISO 306/A of 89.0 °C. Technical data sheet states a melt index (190 °C / 2.16 kg) according to ISO 1133 of 7.7 g / 10 min.

Dow PG 7008 is milled in a disc mill PF 300 from Pallmann. Sieve analysis of the obtained ground material is measured and depicted in table B-2. A bulk density of the ground material of 285 g / L is measured. The ground material is employed for compaction.

### SM-PA-4: Luwax AL-3

Luwax AL-3 (TM, commercially available from BASF as a powder) is a polyethylene wax (CAS-No. 9002-88-4), which is synthesized by a high-pressure polymerization. Branching of the long polymeric chains occurs by long chains (-[CH₂-CH₂-]ₙ-H). Some physical-chemical properties are measured and depicted in table B-1.

Technical data sheet states a density at 23 °C according to DIN 53479 and ASTM D-792 of 0.91 - 0.925 g / cm³.

Technical data sheet states a drop point (Ubbelohde) according to DIN 51801 and ASTM D-3954 of 101-112 °C.

Technical data sheet states a melting point (DSC) according to DIN 51007 and ASTM D-3418 of 102-108 °C.

Technical data sheet states a melt viscosity at 120 °C according to DIN 51562 and ASTM D-2162 of 135-240 mm²/s.

Sieve analysis of the material in the technical form powder is measured and depicted in table B-2. A bulk density of 495 g / L is measured. The material in its technical form is employed for compaction.

### SM-PA-5: Licocene PP 1502

Licocene PP 1502 (TM, commercially available from Clariant, employed commercial technical form: fine grain) is a propylene-ethylene copolymer wax (CAS-No. 9010-79-1), which is synthesized with a metallocene catalyst from propylene and ethylene. Branching of the long polymeric chains occurs by short chains (-CH₃). Some physical-chemical properties are measured and depicted in table B-1.

Technical data sheet states a density at 23°C according to ISO 1183 of 0.87 g / cm³.

Technical data sheet states a drop point according to ASTM D 3954 of 83-90 °C.

Technical data sheet states a viscosity at 170 °C according to DIN 53019 of 1500-2100 mPas. Sieve analysis of the material in the technical form fine grain is measured and depicted in table B-2. A bulk density of 374 g / L is measured. The material in its technical form fine grain is employed for compaction.

### SM-PA-6: Pluriol E3350 Prill

Pluriol E 3350 (TM, commercially available from BASF Pharma Solutions, obtained in the form of solid prills) is a cGMP Pharmaceutical Grade polyethylene glycol (CAS-No. 25322-68-3) with a mean molecular weight of 3350 that forms anhydrous, hydrophilic ointments in combination with low molecular weight PEGs. Some physical-chemical properties are measured and depicted in table B-1.

Safety data sheet states a freezing point of 59 °C at 1.013 hPa.

Safety data sheet states a dynamic viscosity of 76-110 mPa·s at 99 °C.

Safety data sheet states a bulk density of 0.61-0.65 g / mL.

Sieve analysis of the material in the technical form prills is measured and depicted in table B-2. A bulk density of 650 g / L is measured. The material in its technical form prills is employed for compaction.

### SM-PA-7: GMS 90

GMS 90 respectively Glyceryl-Monostearate 90-95 (glyceryl monostearate as INCI name, commercially available from Faci SPA, CAS-No. 91052-47-0, obtained in the technical form of a powder) is a mixture of mono-, di- and triglycerides of commercial stearic acid, i.e. containing mainly C18 fatty acid and few C16 fatty acid, which contains around 97% monoglycerides. It is also identified as 1,2,3-propanetriol monoester of octadecanoic acid (CAS-No. 31566-31-1). Depicted below is 2,3-dihydroxypropyl octadecanoate

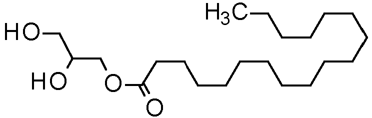

Some physical-chemical properties are measured and depicted in table B-1.

Safety data sheet states a melting point of 54-70 °C.

Safety data sheet states a density of 0.95-0.96 g/cm³ at 70 °C.

Sieve analysis of the material in the technical form powder is measured and depicted in table B-2. A bulk density of 590 g / L is measured. The material in its technical form powder is employed for compaction.

**Table B-1: measured ohvsical-chemical properties of starting materials processing aids**

| starting material | commercial name | DSC measurement | | | HT-GPC measurement | | |
|---|---|---|---|---|---|---|---|
| | | melting range [°C] | melting peak temperature [°C] | melting enthalpy [J / g] | Mn [Da] | Mw [Da] | PD |
| SM-PA-1 | Licocene PP 1302 | 24-95 | 76 | 23 | 6833 | 17285 | 2.53 |
| SM-PA-2 | Petrolite EP-700 | 27-104 | 88 | 218 | 1335 | 1532 | 1.15 |
| SM-PA-3 | Dow PG 7008 | 25-116 | 106 | 117 | 30176 | 367733 | 12.2 |
| SM-PA-4 | Luwax AL-3 | 24-112 | 105 | 127 | 3128 | 7613 | 2.43 |
| SM-PA-5 | Licocene PP 1502 | 45-95 | 73 | 13 | 16356 | 39302 | 2.40 |
| SM-PA-6 | Pluriol E3350 Prill | 41-75 | 60 | 166 | not measured | not measured | not measured |
| SM-PA-7 | GMS 90 | 55-76 | 72 | 178 | not measured | not measured | not measured |

**Table B-2: sieve analysis**

| starting material | Q3 10% [mm] | Q3 50% [mm] | Q3 90% [mm] |
|---|---|---|---|
| SM-PA-1 | 0.414 | 0.836 | 1.583 |
| SM-PA-2 (ground) | 0.324 | 0.710 | 1.538 |
| SM-PA-3 (ground) | 0.225 | 0.484 | 1.091 |
| SM-PA-4 | 0.302 | 0.740 | 1.521 |
| SM-PA-5 | 0.482 | 0.874 | 1.278 |
| SM-PA-6 | 0.132 | 0.280 | 0.556 |
| SM-PA-7 | 0.164 | 0.316 | 0.547 |

### C) Preparation of mixtures for compaction

Mixtures for compaction consisting of polymer stabilizers and a processing aid are prepared by blending the starting materials as depicted in table C-1 in a 100-L MTI blender for 5 minutes at room temperature.

**Table C-1: mixtures for compaction**

| mixture-No. | polymer stabilizer | amount [%] | processing aid | amount [%] | physical form ^{c)} |
|---|---|---|---|---|---|
| C-M-1 ^{b)} | SM-PS-1 | 66.7 | none | - | powder |
| | SM-PS-2 | 33.3 | | | |
| C-M-2 ^{b)} | SM-PS-1 | 63.3 | SM-PA-1 | 5 | powder |
| | SM-PS-2 | 31.7 | | | |
| C-M-3 ^{b)} | SM-PS-1 | 61.3 | SM-PA-1 | 8 | powder |
| | SM-PS-2 | 30.7 | | | |
| C-M-4 ^{b)} | SM-PS-1 | 61.3 | SM-PA-5 | 8 | powder |
| | SM-PS-2 | 30.7 | | | |
| C-M-5 ^{b)} | SM-PS-1 | 61.3 | SM-PA-2 | 8 | powder |
| | SM-PS-2 | 30.7 | | | |
| C-M-6 ^{b)} | SM-PS-1 | 61.3 | SM-PA-3 | 8 | powder |
| | SM-PS-2 | 30.7 | | | |
| C-M-7 ^{a)} | SM-PS-1 | 61.3 | SM-PA-4 | 8 | powder |
| | SM-PS-2 | 30.7 | | | |
| C-M-8 ^{b)} | SM-PS-1 | 61.3 | SM-PA-6 | 8 | powder |
| | SM-PS-2 | 30.7 | | | |
| C-M-9 ^{b)} | SM-PS-1 | 61.3 | SM-PA-7 | 8 | powder |
| | SM-PS-2 | 30.7 | | | |

| | | | | | |
|---|---|---|---|---|---|
| Food notes: a) inventive b) comparative c) at room temperature and atmospheric pressure d) Flakes by roll compaction | | | | | |

For example D-1-1, the mixture for compaction C-M-1 is press-agglomerated via a roll compaction process to obtain flakes for comparison. The polymer stabilizer mixtures in powder form in a hopper is force-fed via a feeding screw into a compaction zone. The compaction zone is formed by a remaining gap between two rolls with slightly scratched surfaces, which are rotating towards each other. The rolls are cooled with cold water to keep the temperature close to room temperature. A suitable laboratory roll compactor is for example model WP 50N/75 (roll diameter: 150 mm, roll length: 75 mm, maximum press capacity: 12.8 t, maximum linear load: 1.71 t / cm) from the company Alexanderwerk GmbH in Germany. The compacted starting material, which leaves the compaction zone as plates, is granulated via a sieve granulator with a 1.6 mm sieve, for example model GLA-ORV-0215 from company Frewitt Ltd from Switzerland is suitable, to create free flowing flakes (= flakes of D-1-1 and D-3-1). A Norner attrition test is conducted for the flakes of D-1-1 and the results are depicted in table E-1.

### E) Pellets by compaction with a ring die pellet mill

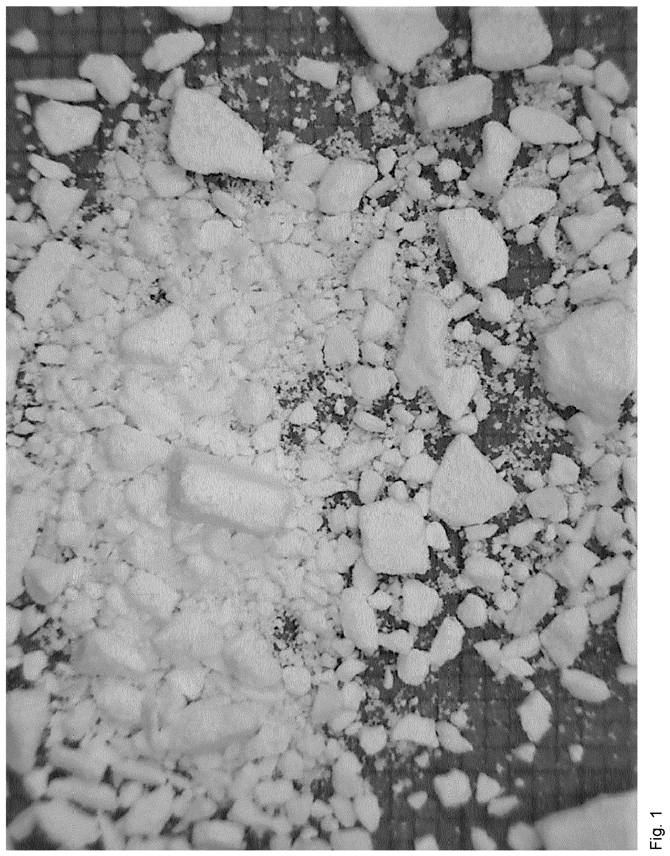

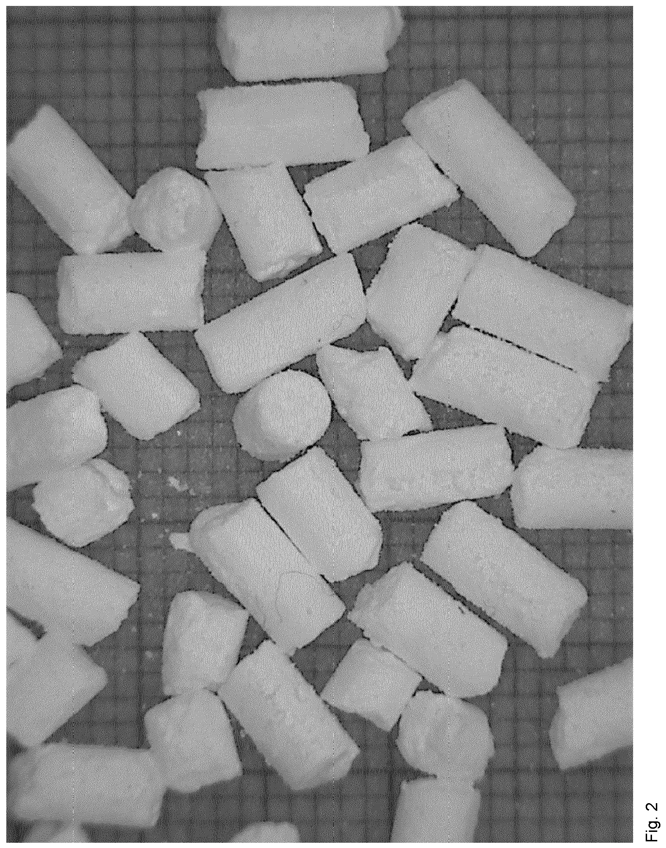

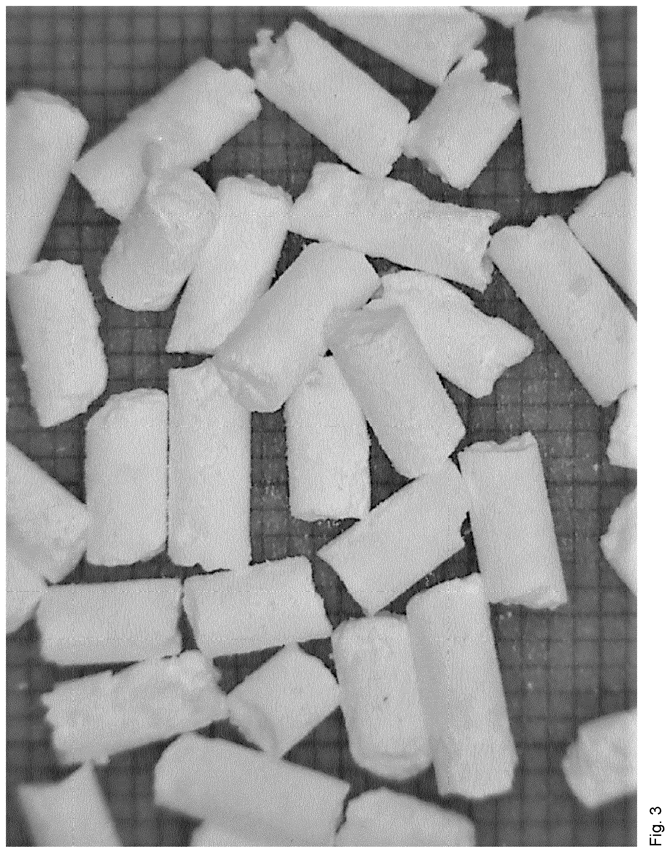

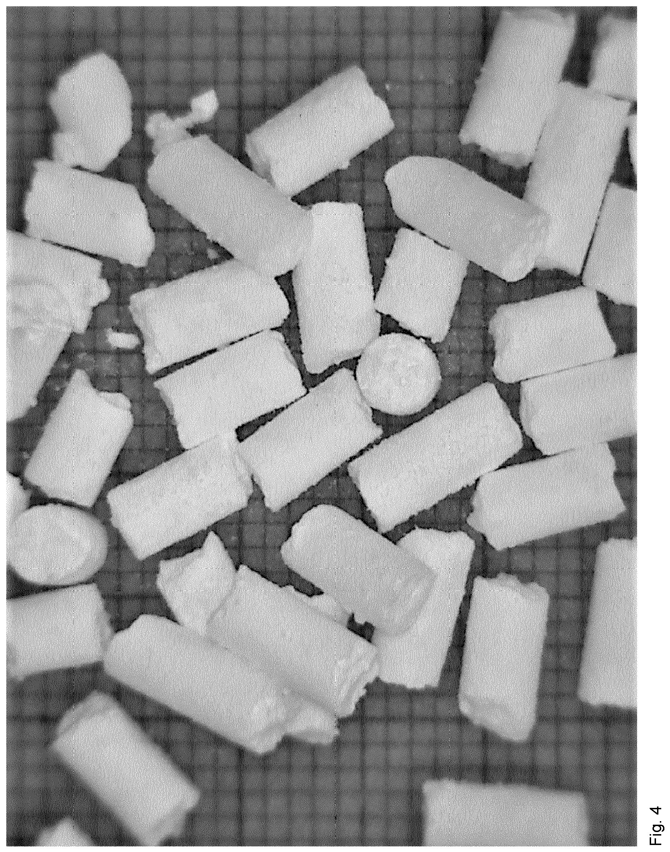

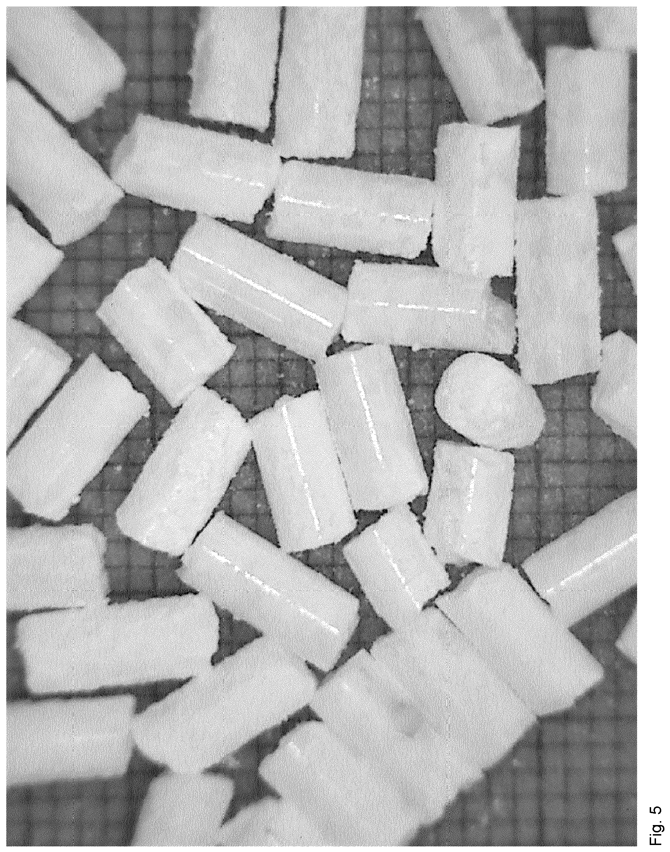

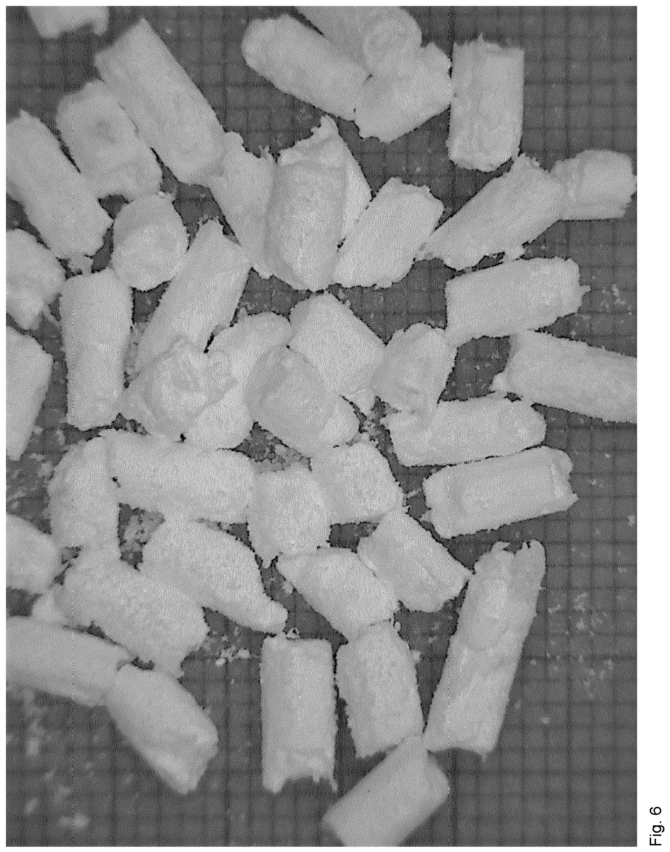

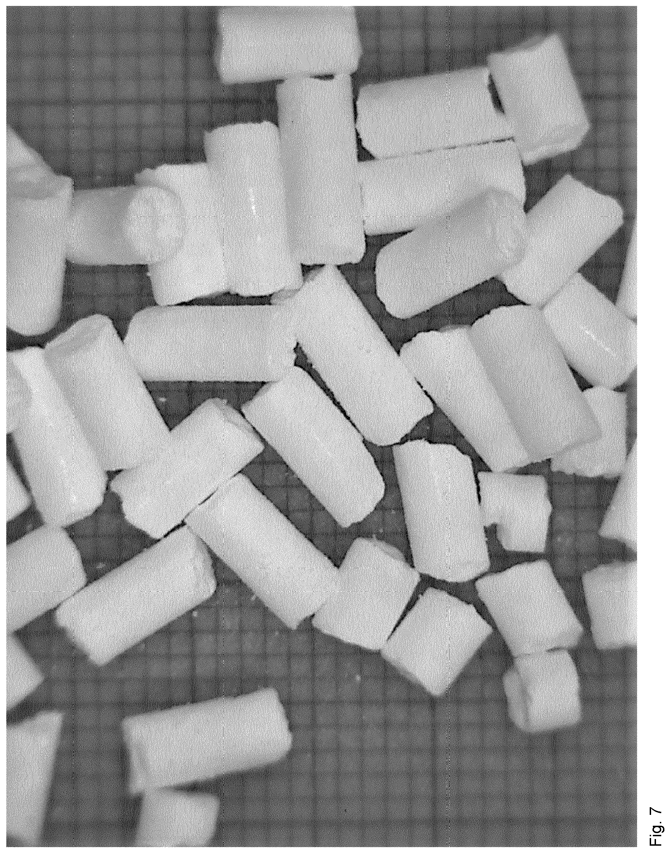

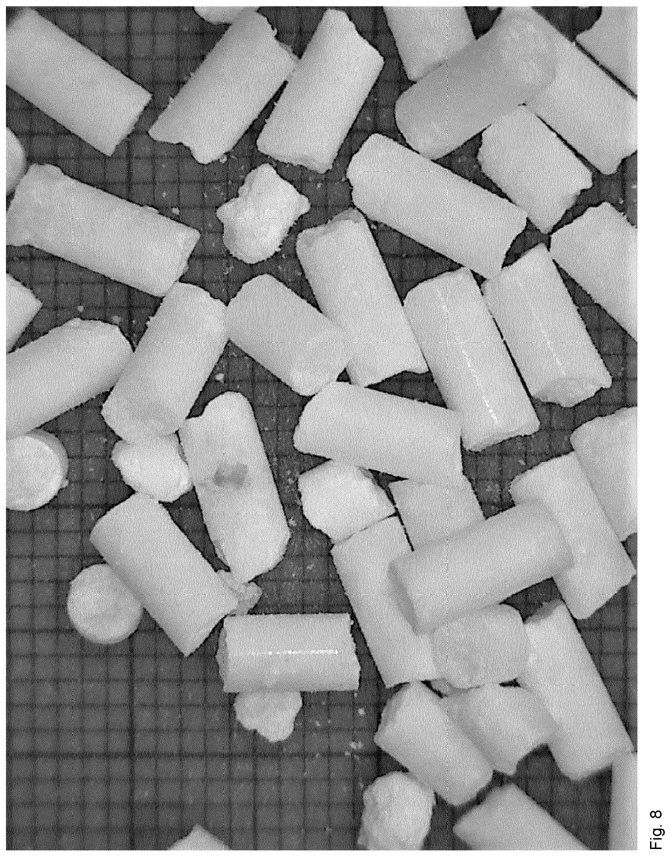

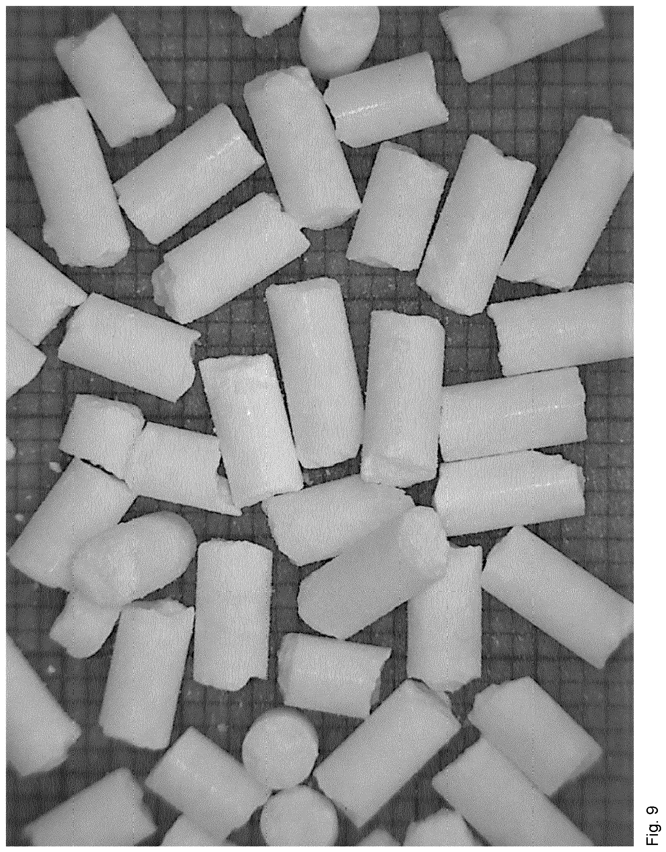

A ring die pellet mill, i.e. a Muench Pelletizer RMP 250, is used for compaction trials of materials as stated in table E-1. A Muench ring-die pellet mill is depicted for example in the article "Produktgestaltung über mechanisches Agglomerieren von Pulvern", W. Raehse, Chemie Ingeneur Technik, 2015, 87, No.7, 881 - 902 at picture 18 on p. 898. The Muench Pelletizer RMP 250 possesses a rotatable ring die, which is equipped with nozzles, e.g. nozzles with a nozzle diameter of 3 mm and a press length of 15 mm. The inner diameter of the ring die is 250 mm and its width is around 4 cm. A row with two or three nozzles fits to this width. The nozzles expand with an angle of 60° to the inner side of the ring die. The nozzle diameter is defined herein as the smallest diameter of the cylindric channel of the nozzle and press length is a distance, where the smallest diameter applies. The cylindric channel of the nozzle might expand after the press length, but the expanded part of the cylindric channel does not contribute for building up friction by the material to be compacted. Here, the channels of the nozzles are not expanded. The specifically applied nozzle diameter and press lengths are stated in table E-1. The material for compaction is dosed at room temperature by a volumetric single screw feeder, which is placed above the pellet press section of the ring-die pellet mill, by gravimetry into the pellet press section, which comprises the die with its nozzles and two rollers. The rollers, each with a diameter of 96 mm and a width of 30 mm, have a corrugated surface. In the pellet press section, the two rollers push the material into the nozzles of the rotating ring-die, where the material is compacted and heated up by shear forces to a temperature, at which the processing aid starts to soften and in a sintering process the compacted material is granulated to cylindrical pellets. For beginning the process, the rotation of the ring die is set to a circumferential velocity of around 1 m / s at the inner surface of the ring die, i.e. at 12.5 cm from an axis of rotation of the ring die. The material for compaction is fed as a powder into the press section. An initial starting phase of around 15 minutes is necessary until a stable running of the process is achieved. While initially a powder of the material for compaction is flowing through the nozzles, this changes towards formation of a strand at some materials for compaction and the ring die, the rollers and the nozzles are reaching a stable temperature. A temperature, which would be too high for a material for compaction, can result in a generation of a pasty mass, which blocks a further feeding of the material for compaction. At the outlet of the nozzle, the strand is cut/broken by two knifes with an adjustable distance to the ring die to pellets with a length of around 1 to 3 times of the diameters of the pellets, i.e. around 3 mm to 9 mm. Ideally, the variation in length is minimal but a certain variation cannot be avoided due to the cutting/breaking. Table E-1 states whether pellets are obtained and thus also whether strands are formed. Once the process is running stable, the temperature of the material exiting the nozzles in the die is measured by an IR-temperature sensor through measuring contactless the emitted IR irradiation and stated in table E-1 as surface temperature of the strand. Statistically, the emitted IR irradiation of the outer surface of the ring is also included. However, at a process running stable, the ring die has warmed up close to the surface temperature of the strand. The ring die itself is not heated or cooled but experiences a warming due to the occurring friction of the material for compaction. The obtained pellets are sieved with a 1.6 mm sieve (200 mm diameter vibrating lab sieve) to separate fines from the obtained pellets. The amount of fines removed by sieving based on the overall amount of material for compaction is stated in table E-1. The removed fines can be directly reused as material to be compacted. The pellets have cooled down to room temperature. If pellets are obtained, a Norner attrition test of the pellets after sieving is conducted and results are depicted in table E-1. Further characterizations of the obtained pellets are depicted in table E-2. Pictures of the pellets obtained at examples E-1-1 to E-1-9 are depicted at Fig. 1 to Fig. 9.

**Table E-1: ring die pellet mill compactions and attrition test results**

| example No. | material for com-pac-tion | composition [wt. %] | nozzle size ^{c)} [mm] | surface temperature of the pellet [°C] | pellets | removed fines [%] | Norner test [%] |
|---|---|---|---|---|---|---|---|
| D-1-1 ^{b),d)} | C-M-1 | SM-PS-1 (66.7) | roll compaction e) | close to room temperature | flakes | - | 98 |
| | | SM-PS-2 (33.3) | | | | | |
| E-1-2 ^{b)} | C-M-2 | SM-PS-1 (63.3) | 3 x 15 | 64 | yes | 6.8 | 81 |
| | | SM-PS-2 (31.7) | | | | | |
| | | SM-PA-1 (5) | | | | | |
| E-1-3 ^{b)} | C-M-3 | SM-PS-1 (61.3) | 3 x 15 | 68 | yes | 5.0 | 64 |
| | | SM-PS-2 (30.7) | | | | | |
| | | SM-PA-1 (8) | | | | | |
| E-1-4 ^{b)} | C-M-4 | SM-PS-1 (61.3) | 3 x 15 | 70 | yes | 7.0 | 50 |
| | | SM-PS-2 (30.7) | | | | | |
| | | SM-PA-5 (8) | | | | | |
| E-1-5 ^{b)} | C-M-5 | SM-PS-1 (61.3) | 3 x 15 | 70 | yes | 37 | 58 |
| | | SM-PS-2 (30.7) | | | | | |
| | | SM-PA-2 (8) | | | | | |
| E-1-6 ^{b)} | C-M-6 | SM-PS-1 (61.3) | 3 x 15 | 71 | yes | 38 | 89 |
| | | SM-PS-2 (30.7) | | | | | |
| | | SM-PA-3 (8) | | | | | |
| E-1-7 ^{a)} | C-M-7 | SM-PS-1 (61.3) | 3 x 15 | 65 | yes | 4.0 | 28 |
| | | SM-PS-2 (30.7) | | | | | |
| | | SM-PA-4 (8) | | | | | |
| E-1-8^{b)} | C-M-8 | SM-PS-1 (61.3) | 3 x 15 | 75 | yes | 41 | 91 |
| | | SM-PS-2 (30.7) | | | | | |
| | | SM-PA-6 (8) | | | | | |
| E-1-9 ^{b)} | C-M-9 | SM-PS-1 (61.3) | 3 x 15 | 73 | yes | 35 | 37 |
| | | SM-PS-2 (30.7) | | | | | |
| | | SM-PA-7 (8) | | | | | |

| | | | | | | | |
|---|---|---|---|---|---|---|---|
| Food notes: a) inventive b) comparative c) nozzle diameter x press length d) example of a roll compaction as described at D) e) trials to compact C-M-1 have failed, i.e. a continously running compaction to obtain pellets could not be achieved | | | | | | | |

From the results of the table E-1:
- mixture for compaction C-M-1, which is without a processing aid, could not be pelletized and the Norner test result for attrition of the flakes from example D-1-1 is not good;
- examples E-1-2, E-1-3, E-1-4 and E-1-5 comprise a propylene-ethylene copolymer wax, but the Norner attrition test results are not as good as the one of example E-1-7 comprising the polyethlyene wax SM-PA-4;
- example E-1-6 comprises the low denstiy polyethylene SM-PA-3, but the Norner attrition test result is not as good as the one of example E-1-7 comprising the polyethlyene wax SM-PA-4;
- example E-1-8 comprises the polyethylene glycol SM-PA-6, but the Norner attrition test result is not as good as the one of example E-1-7 comprising the polyethlyene wax SM-PA-4;
- example E-1-9 comprises the glyceryl monostearate SM-PA-7, but the Norner attrition test result is not as good as the one of example E-1-7 comprising the polyethlyene wax SM-PA-4.

**Table E-2: pellet characterization**

| example No. | material for com-pac-tion | processing aid type and content [%] | pellet diameter ^{c)} [mm] | average pellet length ^{d)} [mm] | average pellet weight [mg] | picture at Fig. | Norner test e) [%] |
|---|---|---|---|---|---|---|---|
| D-1-1 ^{b),f)} | C-M-1 | SM-PS-1 (66.7) | flakes | --- | --- | 1 | 98 |
| | | SM-PS-2 (33.3) | | | | | |
| E-1-2 ^{b)} | C-M-2 | SM-PS-1 (63.3) | 3 | 4.6 | 31 | 2 | 81 |
| | | SM-PS-2 (31.7) | | | | | |
| | | SM-PA-1 (5) | | | | | |
| E-1-3 ^{b)} | C-M-3 | SM-PS-1 (61.3) | 3 | 5.2 | 35 | 3 | 64 |
| | | SM-PS-2 (30.7) | | | | | |
| | | SM-PA-1 (8) | | | | | |
| E-1-4 ^{b)} | C-M-4 | SM-PS-1 (61.3) | 3 | 5.2 | 35 | 4 | 50 |
| | | SM-PS-2 (30.7) | | | | | |
| | | SM-PA-5 (8) | | | | | |
| E-1-5 ^{b)} | C-M-5 | SM-PS-1 (61.3) | 3 | 5.6 | 37 | 5 | 58 |
| | | SM-PS-2 (30.7) | | | | | |
| | | SM-PA-2 (8) | | | | | |
| E-1-6 ^{b)} | C-M-6 | SM-PS-1 (61.3) | 3 | 3.8 | 25 | 6 | 89 |
| | | SM-PS-2 (30.7) | | | | | |
| | | SM-PA-3 (8) | | | | | |
| E-1-7 ^{a)} | C-M-7 | SM-PS-1 (61.3) | 3 | 5.3 | 36 | 7 | 28 |
| | | SM-PS-2 (30.7) | | | | | |
| | | SM-PA-4 (8) | | | | | |
| E-1-8 ^{b)} | C-M-8 | SM-PS-1 (61.3) | 3 | 5.1 | 34 | 8 | 91 |
| | | SM-PS-2 (30.7) | | | | | |
| | | SM-PA-6 (8) | | | | | |
| E-1-9 ^{b)} | C-M-9 | SM-PS-1 (61.3) | 3 | 5.2 | 35 | 9 | 37 |
| | | SM-PS-2 (30.7) | | | | | |
| | | SM-PA-7 (8) | | | | | |

| | | | | | | | |
|---|---|---|---|---|---|---|---|
| Food notes: a) inventive b) comparative c) caused by the diameter of the nozzles d) calculated from average pellet weight e) results from table E-1 depicted again f) example of roll compaction as described at D) | | | | | | | |

From the results of the table E-2:
- examples E-1-2 to E-1-9 show no big differences in average pellet weight except for E-1-6, where the pellets are shorter, and the average pellet weight is here not a reliable indicator for a beneficial Norner test result for attrition;
- the pictures 2 to 9 show no big differences in pellets appearance and the appearance of pellets is here not a reliable indicator for a beneficial Norner test result for attrition.

## Claims

1. A method for manufacturing a pellet in a pellet mill, which comprises a roller and a die with a nozzle, which method comprises the steps of
(A) pressing a mixture for compaction by the roller through the nozzle to obtain a strand, and
(B) comminuting the strand to obtain the pellet,
wherein the mixture for compaction comprises the components
(i) 87 to 97 wt.% of a polymer stabilizer mixture, which comprises the polymer stabilizers
(i-1) 62 to 72 wt.% of tris(2,4-ditert-butylphenyl) phosphite (CAS-No.
31570-04-4),
(i-2) 28 to 38 wt.% of tetrakis-[3-(3,5-ditert-butyl-4-hydroxy-phenyl)-propionyloxymethyl]methane (CAS-No. 6683-19-8), and
wt.% of the polymer stabilizers (i-1) and (i-2) are based on the weight of the polymer stabilizer mixture, and
(ii) 3 to 13 wt.% of a processing aid, which is a polyethylene and which possesses a weight average molecular weight above 2500 Da and below 16000 Da, wherein the weight average molecular weight is determined by gel permeation chromatography (GPC);
and wt.% of the components (i) and (ii) are based on the weight of the mixture for compaction.

2. The method according to claim 1, wherein the processing aid has a melting enthalpy above 118 J / g and below 150 J / g and the melting enthalpy is determined by a differential scanning calorimetry according to EN ISO 11357-3.

3. The method according to claim 1 or 2, wherein the processing aid possesses a number average molecular weight above 1800 Da and below 6000 Da and the number average molecular weight is determined by gel permeation chromatography (GPC), by a high temperature gel permeation chromatography (HT-GPC) according to ISO 16014-4.

4. The method according to claim 1, 2 or 3, wherein the processing aid possesses a melting peak temperature above 90 °C and below 115 °C, and the melting peak temperature is determined by a differential scanning calorimetry according to EN ISO 11357-3.

5. The method according to any precedent claim, wherein the processing aid possesses a polydispersity index above 1.3 and below 7.

6. The method according to any precedent claim, wherein the processing aid is a polyethylene, which is a wax.

7. The method according to any precedent claim, wherein the mixture for compaction comprises
(i) 89 to 96 wt.% of the polymer stabilizer mixture, and
(ii) 4 to 11 wt.% of the processing aid.

8. The method according to any precedent claim, wherein the strand has a surface temperature above 45 °C and below 110 °C, which is determined by measurement of its infrared irradiation.

9. The method according to any precedent claim, wherein the method comprises a step
(pre-A) feeding the mixture for compaction into the pellet mill, wherein the mixture for compaction is in the form of a powder,
and the step (pre-A) occurs before the step (A).

10. The method according to any precedent claim, wherein the pellet mill is a ring die pellet mill, wherein the die has a geometric form of a ring with an inner side and an outer side and the nozzle represent a pass from the inner side to the outer side, or the pellet mill is a flat die pellet mill, wherein the die has a geometric form of a planar plate with an upper side and a lower side and the nozzle represents a pass from the upper side to the lower side.

11. A pellet, which comprises the components
(i) 87 to 97 wt.% of a polymer stabilizer mixture, which comprises the polymer stabilizers
(i-1) 62 to 72 wt.% of tris(2,4-ditert-butylphenyl) phosphite (CAS-No. 31570-04-4),
(i-2) 28 to 38 wt.% of tetrakis-[3-(3,5-ditert-butyl-4-hydroxy-phenyl)-propionyloxymethyl]methane (CAS-No. 6683-19-8), and
wt.% of the stabilizers (i-1) and (i-2) are based on the weight of the polymer stabilizer mixture, and
(ii) 3 to 13 wt.% of a processing aid, which is a polyethylene and which possesses a weight average molecular weight above 2500 Da and below 16000 Da, wherein the weight average molecular weight is determined by gel permeation chromatography (GPC);
and wt.% of the components (i) and (ii) are based on the weight of the pellet.

12. The pellet according to claim 10, which has a shape of a round rod and the round rod has a diameter of a circle, which is between 2 mm and 4 mm, and has a length of 1 to 3 times of the diameter of a circle.

13. A use of a pellet as defined in claim 11 or 12 for a dust-free handling of its components at manufacturing of a stabilized polymer, wherein the polymer is a polyolefin, a polystyrene or a mixture thereof.

14. A method for manufacturing of a stabilized polymer, which comprises the steps of
(AP) dosing a pellet as defined in claim 11 to 12 into a polymer to obtain a pellet-polymer mixture,
(BP) exposing the pellet-polymer mixture to a temperature in the range of 120 to 340°C under mechanical stirring to obtain a stabilized polymer,
wherein the polymer is a polyolefin, a polystyrene or a mixture thereof.

15. A mixture for compaction, which comprises the components
(i) 87 to 97 wt.% of a polymer stabilizer mixture in the physical form of a powder, which comprises the polymer stabilizers
(i-1) 62 to 72 wt.% of tris(2,4-ditert-butylphenyl) phosphite (CAS-No. 31570-04-4),
(i-2) 28 to 38 wt.% of tetrakis-[3-(3,5-ditert-butyl-4-hydroxy-phenyl)-propionyloxymethyl]methane (CAS-No. 6683-19-8), and
wt.% of the polymer stabilizers (i-1) and (i-2) are based on the weight of the polymer stabilizer mixture, and
(ii) 3 to 13 wt.% of a processing aid in the physical form of a powder, which is a polyethylene and which possesses a weight average molecular weight above 2500 Da and below 16000 Da, , wherein the weight average molecular weight is determined by gel permeation chromatography (GPC);
and wt.% of the components (i) and (ii) are based on the weight of the mixture for compaction.

## Patentansprüche

1. Verfahren zur Herstellung eines Pellets in einer Pelletmühle, die eine Walze und einen Düsenkopf mit einer Düse umfasst, wobei das Verfahren die Schritte umfasst
(A) Pressen eines Gemischs zur Verdichtung durch die Walze durch die Düse, um einen Strang zu erhalten, und
(B) Zerkleinern des Strangs, um das Pellet zu erhalten, wobei das Gemisch zur Verdichtung die Komponenten umfasst
(i) 87 bis 97 Gew.-% an einem Polymerstabilisatorgemisch, das die Polymerstabilisatoren enthält
(i-1) 62 bis 72 Gew.-% Tris(2,4-di-tert-butylphenyl)phosphit (CAS-Nr. 31570-04-4),
(i-2) 28 bis 38 Gew.-% Tetrakis-[3-(3,5-di-tert-butyl-4-hydroxyphenyl)propionyloxymethyl]methan (CAS-Nr. 6683-19-8) und
wobei die Gew.-% der Polymerstabilisatoren (i-1) und (i-2) auf das Gewicht des Polymerstabilisatorgemischs bezogen sind, und
(ii) 3 bis 13 Gew.-% an einem Verarbeitungshilfsmittel, das ein Polyethylen ist und das ein gewichtsgemitteltes Molekulargewicht von über 2500 Da und unter 16000 Da aufweist, wobei das gewichtsgemittelte Molekulargewicht durch Gelpermeationschromatographie (GPC) bestimmt wird; und die Gew.-% der Komponenten (i) und (ii) auf das Gewicht des Gemischs zur Verdichtung bezogen sind.

2. Verfahren nach Anspruch 1, wobei das Verarbeitungshilfsmittel eine Schmelzenthalpie über 118 J/g und unter 150 J/g aufweist und die Schmelzenthalpie durch Differentialscanning-Kalorimetrie nach EN ISO 11357-3 bestimmt wird.

3. Verfahren nach Anspruch 1 oder 2, wobei das Verarbeitungshilfsmittel ein anzahlgemitteltes Molekulargewicht über von 1800 Da und unter 6000 Da aufweist und das anzahlgemittelte Molekulargewicht durch Gelpermeationschromatographie (GPC), durch eine Hochtemperatur-Gelpermeationschromatographie (HT-GPC) nach ISO 16014-4 bestimmt wird.

4. Verfahren nach Anspruch 1, 2 oder 3, wobei das Verarbeitungshilfsmittel eine Schmelzmaximum-Temperatur über 90 °C und unter 115 °C aufweist und die Schmelzmaximum-Temperatur durch Differentialscanning-Kalorimetrie nach EN ISO 11357-3 bestimmt wird.

5. Verfahren nach einem der vorstehenden Ansprüche, wobei das Verarbeitungshilfsmittel einen Polydispersitätsindex über 1,3 und unter 7 aufweist.

6. Verfahren nach einem der vorstehenden Ansprüche, wobei das Verarbeitungshilfsmittel ein Polyethylen ist, das ein Wachs ist.

7. Verfahren nach einem der vorstehenden Ansprüche, wobei das Gemisch zum Verdichten umfasst
(i) 89 bis 96 Gew.-% an dem Polymerstabilisatorgemisch und
(ii) 4 bis 11 Gew.-% an dem Verarbeitungshilfsmittel.

8. Verfahren nach einem der vorstehenden Ansprüche, wobei der Strang eine Oberflächentemperatur über 45 °C und unter 110 °C aufweist, die durch Messung seiner Infrarotstrahlung bestimmt wird.

9. Verfahren nach einem der vorstehenden Ansprüche, wobei das Verfahren einen Schritt (Prä-A) des Einspeisens der Gemisch zur Verdichtung in die Pelletmühle umfasst, wobei das Gemisch zur Verdichtung in der Form eines Pulvers vorliegt,
und der Schritt (Prä-A) vor dem Schritt (A) erfolgt.

10. Verfahren nach einem der vorstehenden Ansprüche, wobei die Pelletmühle eine Ringdüsen-Pelletmühle ist, wobei die Düse eine geometrische Form eines Rings mit einer Innenseite und einer Außenseite aufweist und die Düse einen Durchgang von der Innenseite zu der Außenseite darstellt, oder die Pelletmühle eine Flachdüsen-Pelletmühle ist, wobei die Düse eine geometrische Form einer ebenen Platte mit einer Oberseite und einer Unterseite aufweist und die Düse einen Durchgang von der Oberseite zur Unterseite darstellt.

11. Pellet umfassend die Komponenten
(i) 87 bis 97 Gew.-% an einem Polymerstabilisatorgemisch, das die Polymerstabilisatoren enthält
(i-1) 62 bis 72 Gew.-% Tris(2,4-di-tert-butylphenyl)phosphit (CAS-Nr. 31570-04-4),
(i-2) 28 bis 38 Gew.-% Tetrakis-[3-(3,5-di-tert-butyl-4-hydroxyphenyl)propionyloxymethyl]methan (CAS-Nr. 6683-19-8) und
wobei die Gew.-% der Stabilisatoren (i-1) und (i-2) auf das Gewicht des Polymerstabilisatorgemischs bezogen sind, und
(ii) 3 bis 13 Gew.-% an einem Verarbeitungshilfsmittel, das ein Polyethylen ist und das ein gewichtsgemitteltes Molekulargewicht von über 2500 Da und unter 16000 Da aufweist, wobei das gewichtsgemittelte Molekulargewicht durch Gelpermeationschromatographie (GPC) bestimmt wird; und die Gew.-% der Komponenten (i) und (ii) auf das Gewicht des Pellets bezogen sind.

12. Pellet nach Anspruch 10, das eine Form eines runden Stabs aufweist und der runde Stab einen Kreisdurchmesser, der zwischen 2 mm und 4 mm beträgt, und eine Länge von 1- bis 3-mal dem Kreisdurchmesser aufweist.

13. Verwendung eines Pellets nach Anspruch 11 oder 12 für eine staubfreie Handhabung seiner Komponenten bei der Herstellung eines stabilisierten Polymers, wobei das Polymer ein Polyolefin, ein Polystyrol oder ein Gemisch davon ist.

14. Verfahren zur Herstellung eines stabilisierten Polymers, das die Schritte umfasst
(AP) Dosieren eines Pellets nach Anspruch 11 bis 12 in ein Polymer, um ein Pellet-Polymer-Gemisch zu erhalten,
(BP) Exponieren des Pellet-Polymer-Gemischs gegenüber einer Temperatur in dem Bereich von 120 bis 340 °C unter mechanischem Rühren, um ein stabilisiertes Polymer zu erhalten,
wobei das Polymer ein Polyolefin, ein Polystyrol oder ein Gemisch davon ist.

15. Gemisch zur Verdichtung, umfassend die Komponenten
(i) 87 bis 97 Gew.-% an einem Polymerstabilisatorgemisch in der physikalischen Form eines Pulvers, das die Polymerstabilisatoren umfasst
(i-1) 62 bis 72 Gew.-% Tris(2,4-di-tert-butylphenyl)phosphit (CAS-Nr. 31570-04-4),
(i-2) 28 bis 38 Gew.-% Tetrakis-[3-(3,5-di-tert-butyl-4-hydroxyphenyl)propionyloxymethyl]methan (CAS-Nr. 6683-19-8) und
wobei die Gew.-% der Polymerstabilisatoren (i-1) und (i-2) auf das Gewicht des Polymerstabilisatorgemischs bezogen sind, und
(ii) 3 bis 13 Gew.-% an einem Verarbeitungshilfsmittel in der physikalischen Form eines Pulvers, das ein Polyethylen ist und das ein gewichtsgemitteltes Molekulargewicht über 2500 Da und unter 16000 Da aufweist, wobei das gewichtsgemittelte Molekulargewicht durch Gelpermeationschromatographie (GPC) bestimmt wird; und die Gew.-% der Komponenten (i) und (ii) auf das Gewicht des Gemischs zur Verdichtung bezogen sind.

## Revendications

1. Procédé de fabrication d'une pastille dans une pastilleuse, qui comprend un rouleau et une matrice avec une buse, lequel procédé comprend les étapes de
(A) pressage d'un mélange pour le compactage par le rouleau à travers la buse pour obtenir un brin, et
(B) broyage du brin pour obtenir la pastille,
dans lequel le mélange pour le compactage comprend les composants
(i) 87 à 97 % en poids d'un mélange de stabilisants de polymère, qui comprend les stabilisants de polymère
(i-1) 62 à 72 % en poids de tris(2,4-ditert-butylphényle)phosphite (n° CAS 31570-04-4),
(i-2) 28 à 38 % en poids de tétrakis-[3-(3,5-ditert-butyl-4-hydroxy-phényl)-propionyloxyméthyl]méthane (n° CAS 6683-19-8), et
les % en poids des stabilisants de polymère (i-1) et (i-2) sont basés sur le poids du mélange de stabilisants de polymère, et
(ii) 3 à 13 % en poids d'un auxiliaire de traitement, qui est un polyéthylène et qui possède un poids moléculaire moyen en poids supérieur à 2 500 Da et inférieur à 16 000 Da, le poids moléculaire moyen en poids étant déterminé par chromatographie à perméation de gel (GPC) ;
et les % en poids des composants (i) et (ii) sont basés sur le poids du mélange pour le compactage.

2. Procédé selon la revendication 1, dans lequel l'auxiliaire de traitement a une enthalpie de fusion supérieure à 118 J/g et inférieure à 150 J/g et l'enthalpie de fusion est déterminée par une calorimétrie différentielle à balayage selon la norme EN ISO 11357-3.

3. Procédé selon la revendication 1 ou 2, dans lequel l'auxiliaire de traitement possède un poids moléculaire moyen en nombre supérieur à 1 800 Da et inférieur à 6 000 Da et le poids moléculaire moyen en nombre est déterminé par chromatographie à perméation de gel (GPC), par une chromatographie à perméation de gel à haute température (HT-GPC) selon la norme ISO 16014-4.

4. Procédé selon la revendication 1, 2 ou 3, dans lequel l'auxiliaire de traitement possède une température maximale de fusion supérieure à 90 °C et inférieure à 115 °C, et la température maximale de fusion est déterminée par une calorimétrie différentielle à balayage selon la norme EN ISO 11357-3.

5. Procédé selon l'une quelconque des revendications précédentes, dans lequel l'auxiliaire de traitement possède un indice de polydispersité supérieur à 1,3 et inférieur à 7.

6. Procédé selon l'une quelconque des revendications précédentes, dans lequel l'auxiliaire de traitement est un polyéthylène, qui est une cire.

7. Procédé selon l'une quelconque des revendications précédentes, dans lequel le mélange pour le compactage comprend
(i) 89 à 96 % en poids du mélange de stabilisants de polymère, et
(ii) 4 à 11 % en poids de l'auxiliaire de traitement.

8. Procédé selon l'une quelconque des revendications précédentes, dans lequel le brin a une température de surface supérieure à 45 °C et inférieure à 110 °C, qui est déterminée par la mesure de son rayonnement infrarouge.

9. Procédé selon l'une quelconque des revendications précédentes, dans lequel le procédé comprend une étape (pré-A) d'introduction du mélange pour le compactage dans la pastilleuse, dans lequel le mélange pour le compactage est sous la forme d'une poudre,
et l'étape (pré-A) a lieu avant l'étape (A).

10. Procédé selon l'une quelconque des revendications précédentes, dans lequel la pastilleuse est une pastilleuse à matrice annulaire, dans lequel la matrice a une forme géométrique d'un anneau avec un côté intérieur et un côté extérieur et la buse représente un passage du côté intérieur au côté extérieur, ou bien, la pastilleuse est une pastilleuse à matrice plate, dans lequel la matrice a une forme géométrique d'une plaque plane avec un côté supérieur et un côté inférieur et la buse représente un passage du côté supérieur au côté inférieur.

11. Pastille, qui comprend les composants
(i) 87 à 97 % en poids d'un mélange de stabilisants de polymère, qui comprend les stabilisants de polymère
(i-1) 62 à 72 % en poids de tris(2,4-ditert-butylphényle)phosphite (n° CAS 31570-04-4),
(i-2) 28 à 38 % en poids de tétrakis-[3-(3,5-ditert-butyl-4-hydroxy-phényl)-propionyloxyméthyl]méthane (n° CAS 6683-19-8), et
les % en poids des stabilisants (i-1) et (i-2) sont basés sur le poids du mélange de stabilisants de polymère, et
(ii) 3 à 13 % en poids d'un auxiliaire de traitement, qui est un polyéthylène et qui possède un poids moléculaire moyen en poids supérieur à 2 500 Da et inférieur à 16 000 Da, le poids moléculaire moyen en poids étant déterminé par chromatographie à perméation de gel (GPC) ;
et les % en poids des composants (i) et (ii) sont basés sur le poids de la pastille.

12. Pastille selon la revendication 10, qui a la forme d'une tige ronde et la tige ronde a un diamètre d'un cercle, qui est compris entre 2 mm et 4 mm, et a une longueur de 1 à 3 fois le diamètre d'un cercle.

13. Utilisation d'une pastille telle que définie dans la revendication 11 ou 12 pour une manipulation sans poussière de ses composants lors de la fabrication d'un polymère stabilisé, dans laquelle le polymère est une polyoléfine, un polystyrène ou un mélange de ceux-ci.

14. Procédé de fabrication d'un polymère stabilisé, qui comprend les étapes de
(AP) ajout d'une pastille telle que définie dans les revendications 11 à 12 dans un polymère pour obtenir un mélange pastille-polymère,
(BP) exposition du mélange pastille-polymère à une température dans la plage de 120 à 340 °C sous agitation mécanique pour obtenir un polymère stabilisé,
dans lequel le polymère est une polyoléfine, un polystyrène ou un mélange de ceux-ci.

15. Mélange pour le compactage, qui comprend les composants
(i) 87 à 97 % en poids d'un mélange de stabilisants de polymère sous la forme physique d'une poudre, qui comprend les stabilisants de polymère
(i-1) 62 à 72 % en poids de tris(2,4-ditert-butylphényle)phosphite (n° CAS 31570-04-4),
(i-2) 28 à 38 % en poids de tétrakis-[3-(3,5-ditert-butyl-4-hydroxy-phényl)-propionyloxyméthyl]méthane (n° CAS 6683-19-8), et
les % en poids des stabilisants de polymère (i-1) et (i-2) sont basés sur le poids du mélange de stabilisants de polymère, et
(ii) 3 à 13 % en poids d'un auxiliaire de traitement sous la forme physique d'une poudre, qui est un polyéthylène et qui possède un poids moléculaire moyen en poids supérieur à 2 500 Da et inférieur à 16 000 Da, le poids moléculaire moyen en poids étant déterminé par chromatographie à perméation de gel (GPC) ;
et les % en poids des composants (i) et (ii) sont basés sur le poids du mélange pour le compactage.
